# EUROPÄISCHE PATENTSCHRIFT

(11) **EP 2 315 982 B1**
(45) Veröffentlichungstag und Bekanntmachung des Hinweises auf die Patenterteilung: **05.03.2014**
(21) Anmeldenummer: 09777098.6
(22) Anmeldetag: 10.07.2009
(51) Int. Cl.: F24J 2/52, H01L 31/042, E04C 3/07

(54) **BEFESTIGUNGSSTRUKTUR FÜR EIN GROSSFLÄCHIGES SOLARMODUL UND SOLARMODUL**
FASTENING STRUCTURE FOR A LARGE SOLAR MODULE, AND SOLAR MODULE
STRUCTURE DE FIXATION DESTINÉE À UN MODULE SOLAIRE DE GRANDE SURFACE ET MODULE SOLAIRE

(30) Priorität: 14.07.2008 DE 102008032985; 20.10.2008 DE 102008052368; 04.05.2009 DE 102009019829
(43) Veröffentlichungstag der Anmeldung: 04.05.2011
(73) Patentinhaber: Gehrlicher Solar AG, 96465 Neustadt/Coburg (DE)
(72) Erfinder: NÄBAUER, Anton, 80805 München (DE); GEHRLICHER, Klaus, 85540 Haar (DE); RASPINI, Andreas, 85635 Höhenkirchen (DE)
(74) Vertreter: Thum, Bernhard
(86) Internationale Anmeldenummer: PCT/EP2009/005014
(87) Internationale Veröffentlichungsnummer: WO 2010/006735

(56) Entgegenhaltungen:
- EP-A1- 1 030 132
- EP-A1- 1 703 037
- EP-A1- 1 985 944
- EP-A1- 2 099 077
- EP-A2- 1 496 550
- WO-A1-00/12839
- WO-A2-2009/092401
- WO-A2-2009/149700
- DE-A1- 3 736 211
- DE-A1- 19 529 351
- DE-A1-102005 053 639
- DE-B3-102005 001 653
- DE-U1- 29 912 699
- DE-U1-202004 015 261
- DE-U1-202006 008 614
- DE-U1-202008 000 997
- GB-A- 2 341 618
- JP-A- 2003 172 005
- US-A1- 2003 010 372

## Beschreibung

Die vorliegende Erfindung betrifft eine Befestigungsstruktur für ein großflächiges Solarmodul an einem Unterbau mit wenigstens zwei an einer Komponente von Solarmodul und Unterbau befestigbaren Halteprofilen.

Der Einsatz von photovoltaischen Solarmodulen hat in den vergangenen Jahren erheblich zugenommen. Aufgrund der immer populärer werdenden Nutzung von Solarenergie werden sowohl im privaten Bereich als auch zur kommerziellen Stromerzeugung zunehmend Solarmodule eingesetzt. Dabei hat sich gezeigt, dass insbesondere großflächige Solarmodule an Bedeutung gewinnen. Dies liegt daran, dass bei dem Einsatz von großflächigen Solarmodulen die Kosten bei der Montage und der Verkabelung erheblich gesenkt werden können. Es hat sich jedoch auch gezeigt, dass die Handhabung, insbesondere die Montage derartiger großflächiger Solarmodule, relativ schwierig ist. Insbesondere lassen sich herkömmliche Montagehilfen, wie beispielsweise die Anbringung eines formstabilen Rahmens, an einem großflächigen Solarmodul immer weniger einsetzen, da sie einerseits aufgrund der Größe solcher Solarmodule aufwändiger sind und da sie andererseits zu Problemen führen, wie beispielsweise Verspannungen und dergleichen, die schlimmstenfalls einen Bruch des Solarmoduls zur Folge haben können.

Mit dem zunehmenden Einsatz von großflächigen photovoltaischen Solarmodulen, der sich gerade in jüngerer Zeit einstellt, sind daher auch neue Maßnahmen zum Anbringen derartiger Solarmodule an Tragstrukturen auf Dächern oder an einem Unterbau erforderlich, die den Dimensionen solcher photovoltaischen Solarmodule sowie deren Gewicht Rechnung tragen.

Aus dem deutschen Gebrauchsmuster DE 94 017 41 U1 ist eine Befestigungsstruktur für ein Solarmodul bekannt. Dabei werden auf der Rückseite eines rahmenlosen Solarmoduls längliche Befestigungselemente angebracht, die mit abgewinkelten Schenkeln versehen sind. In den Schenkeln sind Bohrungen angebracht, über welche das Solarmodul an einer Tragstruktur angeschraubt werden kann. Es hat sich gezeigt, dass mit einer derartigen Anordnung exakte Toleranzen zwischen Befestigungselementen und Unterbau eingehalten werden müssen. Werden diese nicht eingehalten, so kommt es zu einer fehlerhaften Ausrichtung oder gar zu Verspannungen am Solarmodul, die schließlich dessen Bruch zur Folge haben können. Aus dem deutschen Gebrauchsmuster DE 20 2007 008 614 U1 ist eine Traganordnung für Solarmodule bekannt, die sich insbesondere zur Anbringung der Solarmodule auf einem Dach eignet. An der Rückseite der Solarmodule werden singuläre Haken und Klammern angebracht, wobei die Haken in auf dem Dach befestigten rohrartigen Modulträgern eingehakt und die Klammern schließlich mit korrespondierenden Modulträgern in Eingriff gebracht werden. Diese Anordnung führt dazu, dass die einzelnen Solarmodule punktuell an den Anbringstellen der Haken bzw. Klammern stärker belastet werden, was wiederum zu Verspannungen führen kann, die schließlich einen Defekt des Solarmoduls nach sich ziehen können.

Ferner zeigt das deutsche Gebrauchsmuster DE 20 2007 008 659 U1 eine Anordnung, bei der rahmenlose Solarmodule mit Kantenschutzelementen aus elastischem Material versehen werden und sodann in Rahmenprofile mit Eingriffsbereichen eingesetzt werden. Derartige Lösungen eignen sich für kleinflächige Solarmodule. Die bei der Montage bei diesem System auftretenden Verspannungen im Solarmodul würden aber zu einer hohen Ausfallrate führen, wenn sie bei großflächigen Solarmodulen eingesetzt werden. Bei dieser Lösung fehlen jegliche Unterstützungsstrukturen für das Solarmodul, wie etwa rückseitige Träger.

Der nächstkommende Stand der Technik gemäß dem Dokument GB 2 341 618 zeigt eine Unterbaukonstruktion, bei der parallel zur Horizontalen verlaufende Querprofile am Solarmodul angebracht werden, die in korrespondierende Queraufnahmen eingesteckt werden. Bei diesen Profilen sind Rastelemente an den Querschienen vorgesehen, die mit korrespondierenden Rastnasen an den Aufnahmeprofilen zusammenwirken und so für eine Verrastung sorgen.

Der Erfindung liegt die Aufgabe zugrunde, eine Befestigungsstruktur für ein großflächiges Solarmodul bereitzustellen, die bei einfachem und kostengünstigem Aufbau eine einfache Montage unter Vermeidung der vorstehend mit Bezug auf den Stand der Technik beschriebenen Nachteile erlaubt.

Diese Aufgabe wird durch eine Befestigungsstruktur der eingangs bezeichneten Art gelöst, welche wenigstens zwei Aufnahmeprofile aufweist, die jeweils an der anderen Komponente von Solarmodul und Unterbau in einer der Relativlage der Halteprofile entsprechenden Relativlage zueinander befestigbar sind, wobei das Halteprofil und das Aufnahmeprofil zueinander komplementäre Profilform aufweisen, derart, dass das Halteprofil im wesentlichen formschlüssig in dem Aufnahmeprofil aufnehmbar ist, wobei an wenigstens einem Paar von ineinander greifenden Halteprofil und Aufnahmeprofil zueinander korrespondierende Eingriffsformationen vorgesehen sind, mit denen das Halteprofil und das Aufnahmeprofl verriegelnd aneinander angreifen.

Erfindungsgemäß werden am Solarmodul vorzugsweise längliche Profile oder Einzelprofile, d.h. entweder Aufnahmeprofile oder Halteprofile, angeordnet, die sich über einen großen Bereich in einer Richtung des Solarmoduls erstrecken. Diese Profile werden dann mit dem korrespondierenden anderen Profil von Halteprofil und Aufnahmeprofil in formschlüssigen Eingriff gebracht. Dadurch ist gewährleistet, dass das Solarmodul über einen großen Bereich, nämlich entlang der unmittelbar an diesen angebrachten Profile abgestützt wird und darüber hinaus auch zuverlässig, nämlich durch den besagten Formschluss, gehalten wird. Dabei kann eine Neigung des Solarmoduls und der mit diesem unmittelbar verbundenen Profile im Rahmen der Montage unterstützend wirken, wie im Folgenden noch im Detail bezüglich der einzelnen Weiterbildungen der Erfindungen erläutert werden wird.

Darüber hinaus sorgen die zueinander korrespondierenden Eingriffsformationen für eine zuverlässige Verriegelung der beiden Profile zueinander derart, dass das Solarmodul an dem Unterbau festgehalten wird. Durch diese Maßnahme sind keine zusätzlichen Befestigungselemente erforderlich, wenngleich diese als Sicherungsmittel, beispielsweise gegen Diebstahlschutz, noch nachträglich bei der Montage angebracht werden können. Grundsätzlich eignet sich aber der erfindungsgemäße Gedanke zweier ineinander greifender Profile zum Anbringen des großflächigen Solarmoduls an dem Unterbau zu einer hinreichenden Fixierung und Ausrichtung des Solarmoduls relativ zum Unterbau, ohne dass zwingenderweise zusätzlich Elemente erforderlich wären, die den Montageaufwand erhöhen.

Wenn im Zusammenhang mit der Beschreibung dieser Erfindung von einem "Solarmodul" die Rede ist, so umfasst dieses herkömmliche photovoltaische Solarmodule zur Stromerzeugung. Gleichsam sind aber auch flächige Strukturen mit umfasst, die beispielsweise einen zwischengeschalteten Energieträger, wie Wasser, nutzen.

Eine Weiterbildung der Erfindung sieht vor, dass das Halteprofil einen sich, vorzugsweise quer zu seiner Längsrichtung, verjüngenden Abschnitt aufweist, mit dem es positionierend in einen korrespondierenden sich erweiternden Abschnitt des Aufnahmeprofils einsetzbar ist. Durch den sich verjüngenden Abschnitt und den dazu korrespondierenden sich erweiternden Abschnitt kommt es zu einer Positionierung von Halteprofil und Aufnahmeprofil, die zu einer gewünschten Ausrichtung des Solarmoduls in einer Solllage genutzt werden kann. In diesem Zusammenhang ist bevorzugt vorgesehen, dass das Halteprofil und das Aufnahmeprofil zumindest in diesem Abschnitt jeweils trapezförmig ausgebildet sind. So können Halteprofil und Aufnahmeprofil über ihre gesamte Profiltiefe trapezförmig ausgebildet sein oder lediglich einen trapezförmigen Abschnitt aufweisen. Alternativ zu einer trapezförmigen Ausgestaltung kann vorgesehen sein, dass das Halteprofil und das Aufnahmeprofil zumindest in einem Abschnitt jeweils als Rundprofil ausgebildet sind.

Um eine formschlüssige Verriegelung von Aufnahmeprofil und Halteprofil zueinander zu gewährleisten, sieht eine Weiterbildung der Erfindung vor, dass das Aufnahmeprofil in einem zur Längsrichtung orthogonalen Schnitt betrachtet eine Hinterschneidung aufweist und das Halteprofil einen korrespondierenden Vorsprung aufweist, wobei das Aufnahmeprofil derart elastisch aufweitbar ist, dass das Halteprofil in das Aufnahmeprofil unter elastischer Verformung einsetzbar ist, woraufhin sich Vorsprung und Hinterschneidung hintergreifen. Dadurch ist es möglich, bei der Montage bereits im Stile einer Rastverbindung Aufnahmeprofil und Halteprofil miteinander fest zu verbinden, so dass sich ein einmal montiertes Solarmodul nur noch unter großem Aufwand von einem Unterbau entfernen lässt. Dies bietet sich insbesondere bei kommerziellen Solarparks an, bei denen eine Vielzahl von Solarmodulen auf einer großen Fläche installiert sind, so dass ein unbeabsichtigtes Entfernen, beispielsweise durch Diebstahl, nicht oder nur mit hohem Überwachungsaufwand völlig unterbunden werden kann. In solchen Fällen ist eine Demontage von Solarmodulen vom Unterbau durch konstruktive Maßnahmen zu verhindern oder zumindest erheblich zu erschweren. In diesem Zusammenhang kann vorgesehen sein, dass das Aufnahmeprofil mit einem Montagewerkzeug aufweitbar ist. Mit anderen Worten ist es bei dieser Ausführungsvariante nicht möglich, ohne das spezlelle Montagewerkzeug das Aufnahmeprofil aufzuweiten, so dass ein Entfernen von Solarmodulen weiter erschwert ist.

Hinsichtlich der Eingriffsformationen sind erfindungsgemäß verschiedene Lösungen vorgesehen. Gemäß einer Ausführungsvariante der Erfindung kann vorgesehen sein, dass das Halteprofil mit wenigstens einer Sicke versehen ist und dass das Aufnahmeprofil mit wenigstens einer korrespondierend angeordneten Komplementärsicke versehen ist, die gemeinsam die Eingriffsformation bilden. So werden an den Halteprofilen und Aufnahmeprofil lokal Sicken und Komplementärsicken ausgebildet. Dies kann durch herkömmliche Umformtechniken im Rahmen einer Blechverarbeitung unter relativ geringem Fertigungsaufwand erfolgen. Zur stabilen Ausgestaltung dieser Sicken bzw. Komplementärsicken kann vorgesehen sein, dass eine Mehrzahl von unmittelbar benachbarten Sicken und Komplementärsicken die Eingriffsformation bilden, wobei die Sicken und Komplementärsicken für sich betrachtet einen Ausschnitt eines Kegelmantels beschreiben. Alternativ lassen sich diese jedoch auch in Form von Ausschnitten aus einem Zylindermantel herstellen. Es sei angemerkt, dass im Bereich der Sicken erfindungsgemäß das Profilmaterial auch teilweise aufgebrochen sein kann. So können auch Gruppen mehrerer benachbarter schräg verlaufender Sicken vorgesehen sein. Die Sicken, einzeln oder in Gruppen, können ferner auch keilförmig ausgebildet sein.

Alternativ zu Sicken, bei denen das Profilmaterial nicht oder nur bereichsweise aufgebrochen ist, kann ferner vorgesehen sein, dass das Halteprofil mit Einschnitten und Laschen versehen ist und dass das Aufnahmeprofil mit korrespondierend angeordneten Komplementäreinschnitten und -laschen versehen ist, die gemeinsam die Eingriffsformation bilden. Mit anderen Worten wird bei dieser Ausführungsvariante das Material der Halteprofile und Aufnahmeprofile lokal über einen längeren teilweise umlaufenden Bereich eingeschnitten und durch Herausbiegen von Laschen deformiert. Die Laschen können aber auch an ihrem aus dem Profil herausgebogenen Bereich abschnittsweise auch noch mit dem verbleibenden Profilmaterial verbunden sein und eben nur bereichsweise von diesem getrennt sein.

Eine weitere Alternative sieht vor, dass zumindest eine Komponente von Halteprofil und Aufnahmeprofil mit Ausklinkungen versehen ist und dass die jeweils andere Komponente von Halteprofil und Aufnahmeprofil mit korrespondierend angeordneten , insbesondere vertieften oder als Ausnehmung ausgebildeten Aufnahmebereichen versehen ist, die gemeinsam die Eingriffsformation bilden. Dabei kann vorgesehen sein, dass die Ausklinkungen als hakenförmige, winkelförmige oder löffelartige Laschen ausgebildet sind, wobei diese Ausklinkungen in die Aufnahmebereiche eingreifen oder an diesen angreifen. Die Aufnahmebereiche können durch korrespondierend geformte Ausnehmungen oder aber auch durch lokale Materialdeformationen erreicht werden. Zur erleichterten Montage sieht eine Weiterbildung der Erfindung vor, dass die Aufnahmebereiche einen erweiterten Einführabschnitt für die Ausklinkungen sowie einen Fixierabschnitt zum Festhalten der Ausklinkungen aufweisen.

Die vorstehend geschilderten Möglichkeiten zur Gestaltung der Eingriffsformationen sehen allesamt vor, dass die Halteprofile und die Aufnahmeprofile einerseits formschlüssig ineinander greifen und andererseits durch Sicken, laschenartigen Ausklinkungen, Bolzen oder dergleichen noch unmittelbar miteinander in Eingriff gelangen. Letzteres lässt sich dazu nutzen, um eine gewünschte Relativlage von Halteprofilen und korrespondierenden Aufnahmeprofilen zueinander einzustellen.

Die Erfindung sieht in diesem Zusammenhang vor, dass die Eingriffsformationen, insbesondere die Sicken oder Laschen, bezüglich einer Längsachse des Aufnahmeprofils sowie des Halteprofils zumindest abschnittsweise schrägen Verlauf aufweisen, derart, dass bei fortschreitendem Aneinanderangreifen der Grad des gegenseitigen Eingriffs erhöht wird. Mit anderen Worten bilden die Eingriffsformationen Anzugschrägen, die bewirken, dass bei fortschreitendem Aneinanderangreifen der Aufnahmeprofile und Halteprofile in Folge einer Relativbewegung diese aufeinander zu gespannt und somit in Ergänzung zu dem vorstehend bereits genannten Formschluss miteinander verzahnt oder verkeilt werden. Dieser Effekt wird insbesondere dadurch verstärkt, dass der Verlauf der Eingriffsformation derart schräg ausgerichtet ist, dass bei einer Montage des Solarmoduls die den Anzugeffekt bewirkende Relativbewegung schwerkraftbedingt unterstützt ist. Mit anderen Worten wird der Verlauf der Eingriffsformationen derart festgelegt, dass die Wirkung der Schwerkraft der schräg angeordneten Solarmodule eine Art Selbstverstärkungseffekt leistet und den Anzugeffekt weiter erhöht.

Vorstehend wurden insbesondere Eingriffsformationen beschrieben, bei denen das Halteprofil oder/und das Aufnahmeprofil zumindest lokal eingeschnitten werden muss, wobei dessen Oberfläche "verletzt" wird. Alternativ hierzu ist eine Weiterbildung der Erfindung vorgesehen, die jeweiligen Profile nicht durch Schnitte oder Ausstanzungen zu verletzen und stattdessen durch Formgebung mit lokalen dreidimensionalen Deformationen der Oberfläche Eingriffsformationen zu schaffen. Dabei kann vorgesehen sein, dass das Halteprofil mit lokalen Deformationen versehen ist und dass das Aufnahmeprofil mit komplementären bzw. korrespondierenden lokalen Deformationen versehen ist, wobei das Halteprofil in einer Montagestellung mit einem quer zu seiner Längsrichtung vorspringenden Bereich seiner lokalen Deformationen in einen entsprechend quer zu seiner Längsrichtung aufgeweiteten Bereich des Aufnahmeprofils quer zur Längsrichtung einsetzbar ist und nach einer Relatiwerlagerung zwischen Halteprofil und Aufnahmeprofil entlang deren Längsrichtung der vorspringende Bereich des Halteprofils einen diesen aufnehmenden zurückgesetzten Bereich des Aufnahmeprofils formschlüssig hintergreift. Vorzugsweise ist bei dieser Variante vorgesehen, dass das Halteprofil und das Aufnahmeprofil im Bereich der lokalen Deformationen ohne Unterbrechung des Materials als kontinuierliche Profile ausgebildet sind. So wird erreicht, dass etwa durch Beschichtung beziehungsweise Galvanisierung korrosionsgeschützte Profile nachträglich nicht an ihrer Oberfläche verletzt und in unerwünschter Weise von ihrem Korrosionsschutz befreit werden.
Bei dieser Variante, bei der die Eingriffsformationen allein durch Umformen erreicht werden, ergibt sich ein formschlüssiges Zusammensetzen gemäß einem Schlüssel-Schloss-Prinzip. Dieses formschlüssige Ineinandergreifen von Aufnahmeprofil und Halteprofil lässt sich allein aufgrund der Formgebung in den lokalen deformierten Bereichen erreichen. Das Zusammensetzen im Rahmen der Montage erfolgt durch Einsetzen quer zur Profillängsrichtung und anschließendes Verschieben zum Erzielen des Formschlusses in Profillängsrichtung.

Eine Weiterbildung der Erfindung sieht vor, dass an dem Halteprofil oder/und an dem Aufnahmeprofil Rampenformationen oder/und Anschlagelemente vorgesehen sind, die eine vorbestimmte Positionierung von Aufnahmeprofil und Halteprofil relativ zueinander in Profillängsrichtung oder quer zur Profillängsrichtung festlegen. Obgleich aufgrund des formschlüssigen Ineinandergreifens von Halteprofil und Aufnahmeprofil bereits eine Ausrichtung in Solllage zueinander erfolgt, können derartige Anschlagelemente eine definierte Solllage zusätzlich zu diesem Ausrichtungseffekt vorgeben, beispielsweise durch Einrasten in diese Solllage oder dergleichen. Auch kann dadurch ein unerwünschtes Aufspreizen des Aufnahmeprofils unterbunden werden.

Wie bereits ausgeführt, werden große Bereiche des Solarmoduls durch die an diesem angebrachten Aufnahmeprofil oder Halteprofil gestützt. Das jeweils unmittelbar am Solarmodul angebrachte Profil kann dementsprechend schwächer ausgebildet sein. In diesem Zusammenhang kann vorgesehen sein, dass die an dem Solarmodul unmittelbar angebrachte Komponente von Halteprofil und Aufnahmeprofil in Profillängsrichtung länger ausgebildet ist, als die jeweils andere Komponente. Ferner kann vorgesehen sein, dass die an dem Solarmodul unmittelbar angebrachte Komponente von Halteprofil und Aufnahmeprofil in Richtung orthogonal zum Solarmodul betrachtet mit geringerer Tiefe ausgebildet ist, als die jeweils andere Komponente. Dadurch wird der vorteilhafte Effekt erreicht, dass eine größere Anzahl von Solarmodulen zum Transport in einem vorgegebenen Laderaum gestapelt werden kann. Die nicht unmittelbar am Solarmodul angebrachten, tiefer ausgebildeten Profile können platzsparend ineinander gestapelt werden.

Zum Anbringen von Halteprofilen oder Aufnahmeprofilen an dem Solarmodul kann eine hitzebeständige Klebstoffschicht vorgesehen sein. Eine Weiterbildung der Erfindung sieht vor, dass die Klebstoffschicht eine Mindestdicke von 2 mm aufweist und elastisch ausgebildet ist. Durch die Möglichkeit zur elastischen Deformation kann die Klebstoffschicht Fertigungstoleranzen, Montagetoleranzen sowie unterschiedliche thermische Ausdehnungen im Einsatzfall ausgleichen. Als Klebstoff können beispielsweise hitzebeständige Silikonmassen verwendet werden.

Nachzutragen ist, dass alternativ zu Sicken oder Laschen ferner vorgesehen sein kann, dass zumindest einen Komponente von Halteprofil und Aufnahmeprofil mit Bolzen, insbesondere Kopfbolzen, versehen ist und dass die jeweils andere Komponente von Halteprofil und Aufnahmeprofil mit korrespondierend angeordneten Aufnahmebereichen versehen ist, die gemeinsam die Eingriffsformation bilden. Zum Erreichen des vorstehend beschriebenen Anzugeffektes kann in diesem Zusammenhang vorgesehen sein, dass die Aufnahmebereiche schrägen Verlauf aufweisen.

Es hat sich ferner herausgestellt, dass es dann, wenn die Verbindung zwischen Halteprofil und Aufnahmeprofil hergestellt wird, unter dem Gesichtspunkt der Fertigungstoleranzen von Vorteil sein kann, wenn das Aufnahmeprofil vor der Herstellung der Verbindung mit dem Aufnahmeprofil mit einem gewissen Bewegungsspielraum auf der Unterkonstruktion vormontiert ist. Dieser Bewegungsspielraum kann beispielsweise dadurch hergestellt werden, dass das Aufnahmeprofil mit damit fest verbundenen Schrauben in die korrespondierenden Befestigungslöchern der Unter-konstruktion gesteckt ist, und die Befestigungsmuttern noch nicht - oder zumindest noch nicht fest - auf die Schrauben aufgeschraubt werden. Der Bewegungsspielraum der Aufnahmeschiene ist dann durch die Form und Größe der Befestigungslöcher in der Unterkonstruktion definiert. Der Bewegungsspielraum sollte nicht so groß werden, dass Halteprofil und Aufnahmeprofil nicht mehr gut zueinander finden. Da durch den Bewegungsspielraum die Fertigungstoleranzen ausgeglichen werden sollen, liegt der optimale Bewegungsspielraum im Bereich der maximal auszugleichenden Fertigungsstreuung. Nachdem das Halteprofil in das Aufnahmeprofil eingeführt wurde und zwischen Halteprofil und Aufnahmeprofil ein Formschluss hergestellt wurde, kann der Bewegungsspielraum zwischen Unterkonstruktion und Aufnahmeprofil eingeschränkt oder ganz beseitigt werden, beispielsweise durch Festziehen der oben beschriebenen SchraubenMutter-Verbindung.

Wie vorstehend bereits ausgeführt, kann erfindungsgemäß vorgesehen sein, dass jedes Halteprofil und Aufnahmeprofil relativ zu einer Horizontalen geneigt ist. Je nach Ort, an dem das Solarmodul mit der erfindungsgemäßen Befestigungsstruktur aufgestellt wird, kann die Neigung mehr oder weniger stark gewählt werden. Üblicherweise sind Solarmodule in Äquatornähe flacher oder ganz ohne Neigung zur Horizontalen angeordnet, wohingegen bei Aufstellorten, die eine größere Entfernung zum Äquator haben, zu Gunsten einer hinreichenden Sonneneinstrahlung die Neigung vergrößert wird.

Im Rahmen der Beschreibung der Erfindung wurde bereits erläutert, dass an der Rückseite des Solarmoduls entweder längliche schienenartige Halteprofile angeordnet werden können, oder auch einzelne Halteprofilelemente. Im letztgenannten Fall kann erfindungsgemäß vorgesehen sein, dass mehrere Halteprofilelemente auf der Rückseite des Solarmoduls linear zueinander ausgerichtet sind oder auf einer gemeinsamen Halteprofilschiene angebracht sind. Hinsichtlich der konkreten Gestaltung eines einzelnen Halteprofilelements kann vorgesehen sein, dass dieses einen sich von dem Solarmodul weg erstreckenden kopfartigen Vorsprung aufweist, der mit einer Hinterschneidung in einem komplementären Aufnahmeprofil aufnehmbar ist. Dabei kann der kopfartige Vorsprung rotationssymmetrisch oder quer zur Vorsprungsrichtung gestreckt ausgebildet sein.

Um eine vorbestimmte Relativlage der rückseitig am Solarmodul angebrachten Halteprofile relativ zum Solarmodul dauerhaft sicherzustellen sieht eine Weiterbildung der Erfindung wenigstens eine Greiferlasche zum Angreifen an einer Stirnseite eines Solarmoduls vor. Vorzugsweise ist dabei vorgesehen, dass die wenigstens eine Greiferlasche an dem Halteprofil angeordnet ist. Mit anderen Worten umgreift das jeweilige Halteprofil das Solarmodul lokal mit der Greiferlasche im Stile eines Winkels und sorgt so für eine vorbestimmte Ausrichtung. Dies kann beispielsweise auch bei der Anbringung der Halteprofile an der Rückseite des Solarmoduls durch eine Klebeschicht vorteilhaft sein, weil so das Halteprofil bei noch nicht getrocknetem Kleber in vorbestimmter Ausrichtung zum Solarmodul bleibt. Auch kann dadurch ein unerwünschtes Abrutschen oder schleichendes "Migrieren" des Solarmoduls bei Versagen der Klebeschicht, beispielsweise aufgrund thermischer Beeinträchtigung des Klebstoff, verhindert werden.

Eine Ausführungsform der Erfindung sieht in diesem Zusammenhang vor, dass sich die wenigstens eine Greiferlasche von einem an der Rückseite des Solarmoduls angebrachten Abschnitt des Halteprofils zur Stirnseite hin erstreckt und diese abschnittsweise umgreift. Es können auch mehrere Greiferlaschen pro Halteprofil vorgesehen sein.

Alternativ zu einer derartigen Anbringung der wenigstens einen Greiferlasche am Halteprofil kann erfindungsgemäß ferner vorgesehen sein, dass sich die wenigstens eine Greiferlasche von einem zu der Rückseite des Solarmoduls im Abstand angeordneten Abschnitt des Halteprofils zur Stirnseite hin erstreckt und diese abschnittsweise umgreift.

Vorstehend wurde geschildert, dass sich die erfindungsgemäße Befestigungsstruktur dadurch auszeichnet, dass Aufnahmeprofil und Halteprofil in ihrer Längsrichtung über einen großen Bereich aneinander angreifen und so für einen sicheren Halt des Solarmoduls sorgen. Dies kann durch flächigen Formschluss oder durch lokales angreifen an mehreren Stellen erreicht werden. Eine Weiterbildung der Erfindung sieht vor, dass am Halteprofil oder/und am Aufnahmeprofil lokale Vorsprünge vorgesehen sind, die einen Mindestabstand zwischen Halteprofil und Aufnahmeprofil vorsehen. Bei diesen Mindestabstand handelt es sich um einen kleinen Spalt, der gerade groß genug ist, um eine Luftzirkulation und ein Abfließen von Wasser zu ermöglichen. Dadurch lassen sich langfristig Korrosionseffekte vermeiden. Derartige lokale Vorsprünge lassen sich in mehr oder weniger große Anzahl entlang der Längsrichtung der Profile vorsehen. Die Anlage von Aufnahmeprofil und Halteprofil im Bereich dieser lokalen Vorsprünge sollte zur Stabilisierung flächig sein. Insbesondere kann die Anlagefläche plateauartig oder ringförmig ausgebildet sein. In diesem Zusammenhang ist eine Weiterbildung der Erfindung vorgesehen, dass die lokalen Vorsprünge in ihrem Zentrum mit einer Ausnehmung oder Vertiefung versehen sind, wobei eine Anlage zwischen dem lokalen Vorsprung und dem an diesem angreifenden Abschnitt von Halteprofil oder Aufnahmeprofil in einem die Ausnehmung umgebenden ringförmigen Randbereich des lokalen Vorsprungs erfolgt. Mit anderen Worten liegen die lokalen Vorsprünge nicht punktuell, sondern über eine geschlossene Ringfläche an der diesen zugewandten Fläche des jeweils anderen Profils an. Durch die Ausnehmungen wird die Luftzirkulation sowie das Abfließen von Wasser unter stützt.

Um bei der Montage eines Solarmoduls mit einer erfindungsgemäßen Befestigungsstruktur zusätzlich eine sichere elektrische Verbindung herzustellen, kann bei der erfindungsgemäßen Befestigungsstruktur ferner vorgesehen sein, dass jeweils ein elektrischer Verbinder am Halteprofil sowie ein elektrischer Komplementärverbinder am Aufnahmeprofil angebracht ist, wobei der elektrische Verbinder und der elektrische Komplementärverbinder sich in kontaktierendem Eingriffszustand befinden, wenn das Aufnahmeprofil und das Halteprofil verriegelnd aneinander angreifen.

Die Erfindung betrifft ferner ein Halteprofil für eine Befestigungsstruktur der vorstehend beschriebenen Art, mit den vorstehend für die einzelnen Halteprofile beschriebenen Merkmalen.

Die Erfindung betrifft ferner ein Aufnahmeprofil für eine Befestigungsstruktur der vorstehend beschriebenen Art mit den vorstehend genannten aufnahmeprofilspezifischen Merkmalen. Schließlich betrifft die Erfindung auch einen Unterbau mit einem Halteprofil oder einem Aufnahmeprofil der vorstehend beschriebenen Art.

Die Erfindung betrifft ferner ein Solarmodul, insbesondere ein großflächiges Solarmodul, mit einer Befestigungsstruktur der vorstehend beschriebenen Art.

Im Folgenden wird die Erfindung beispielhaft anhand der beiliegenden Figuren erläutert. Es stellen dar:
- Fig. 1: eine erläuternde Übersichtsdarstellung zu einem Solarmodul mit Unterbau;
- Fig. 2: eine Vorderansicht des Solarmoduls mit Halteprofil;
- Fig. 3: eine abgewandelte Vorderansicht des Solarmoduls mit Halteprofil;
- Fig. 4: eine weitere abgewandelte schematische Ansicht des Solarmoduls mit Halteprofil;
- Fig.5a bis 5c: eine schematische Darstellung verschiedener Montagephase mit einem Solarmodul nach Fig. 4
- Fig. 6a bis 6c: Ansichten entsprechend Fig. 5a bis 5c mit einem Montagewerkzeug;
- Fig. 7: eine Ansicht entsprechend Fig. 1 zur Erläuterung der Erfindung;
- Fig. 8: eine schematische Darstellung eines alternativen Profils;
- Fig. 9: eine Alternative zu Fig. 8;
- Fig. 10: eine weitere Alternative zu Fig. 8 und 9.
- Fig. 11: eine schematische Darstellung eines weiteren Ausführungsbeispiels der Erfindung;
- Fig. 12a und 12b: Vorderansichten des Profils des Ausführungsbeispiels nach Fig. 11;
- Fig. 13: eine schematische Darstellung eines weiteren Ausführungsbeispiels der Erfindung;
- Fig. 14a und 14b: Vorderansichten des Profils des Ausführungsbeispiels nach Fig. 11;
- Fig. 15: eine perspektivische Ansicht eines weiteren Ausführungsbeispiels der Erfindung;
- Fig. 16: eine perspektivische Ansicht eines weiteren Ausführungsbeispiels der Erfindung;
- Fig. 17a: eine perspektivische Ansicht zweier Profile eines weiteren Ausführungsbeispiels der Erfindung;
- Fig. 17b: eine Vorderansicht der Profile gemäß Fig. 17a;
- Fig. 17c: eine Ansicht entsprechend Fig. 17a, jedoch in zusammengesetztem Zustand;
- Fig. 17d: eine Ansicht entsprechend Fig. 17b, jedoch in zusammengesetztem Zustand;
- Fig. 18a: eine perspektivische Ansicht eines weiteren Ausführungsbeispiels der Erfindung;
- Fig. 18b: eine Vorderansicht der Ausführungsform gemäß Fig. 18a;
- Fig. 19a bis 19d: verschiedene Zustände beim Zusammensetzen einer weiteren Ausführungsform der Erfindung;
- Fig. 20a bis 20c: perspektivische Ansichten zu der Montage der Ausführungsform nach Fig. 19a bis 19d;
- Fig. 21: eine weitere Ausführungsform der Erfindung;
- Fig. 22: eine weitere Ausführungsform der Erfindung;
- Fig. 23: eine weitere Ausführungsform der Erfindung;
- Fig. 24: eine weitere Ausführungsform der Erfindung;
- Fig. 25: eine Ansicht ähnlich Fig. 7 mit einer weiteren Ausführungsform der Erfindung;
- Fig. 26a: ein Halteprofil einer weiteren Ausführungsform der Erfindung;
- Fig. 26b: eine Seitenansicht eines Aufnahmeprofils zum Halteprofil gemäß Fig. 26a;
- Fig. 27a, b, c: verschiedene Phasen bei der Montage eines Halteprofils mit einem Aufnahmeprofil mit Diebstahlschutz;
- Fig. 28: eine weitere Ausführungsform der Erfindung;
- Fig. 29a, b, c: verschiedene Deformationssituationen für das Ausführungsbeispiel gemäß Fig. 28;
- Fig. 30a, b: Ansichten hinsichtlich eines raumsparenden Transports für Solarmodule mit einer Befestigungsstruktur gemäß dem Ausführungsbeispiel nach Fig. 28;
- Fig. 31a, b, c: verschiedene Montagesituationen erfindungsgemäßer Solarmodule bei einer Anbringung auf einem Dach;
- Fig. 32: ein weiteres erfindungsgemäßes Ausführungsbeispiel eines Solarmoduls mit einer Befestigungsstruktur;
- Fig. 33: ein Befestigungselement der Ausführungsform nach Fig. 32 in vergrößerter perspektivischer Darstellung;
- Fig. 34: eine weitere Ausführungsform der Erfindung mit einem entsprechenden Solarmodul;
- Fig. 35: eine vergrößerte perspektivische Darstellung eines Befestigungselements gemäß Fig. 34;
- Fig. 36: das Zusammenwirken von Aufnahmeprofil und Halteprofil hinsichtlich der Ausführungsvariante nach Fig. 34;
- Fig. 37a: eine weitere Ausführungsform der Erfindung vor der Montage;
- Fig. 37b: die Ausführungsform gemäß Fig. 37a im montierten Zustand;
- Fig. 38: eine achsorthogonale Schnittansicht im Bereich von ineinander greifendem Aufnahmeprofil und Halteprofil;
- Fig. 39: eine Alternative zu der Ausführungsform gemäß Figur 34;
- Fig. 40: eine vergrößerte perspektivische Ansicht entsprechend Fig. 35 einer alternativen Ausführungsform eines Befestigungselements gemäß der vorliegenden Erfindung;
- Fig. 41: einen Eckbereich eines Aufnahmeprofils mit lokalen Vorsprüngen;
- Fig. 42: eine perspektivische Ansicht mit transparent gezeichneten Solarmodulen hinsichtlich einer Weiterbildung des Halteprofils;
- Fig. 43: eine alternative Ausführungsform zu der Gestaltung gemäß Fig. 42;
- Fig. 44: eine alternative Ausführungsform zu der Gestaltung gemäß Fig. 42 und 43;
- Fig. 45: eine Detailansicht einer Komponente einer erfindungsgemäßen Eingriffsformation;
- Fig. 45a: eine Detailansicht einer Öffnung in der anderen Komponente die mit der Eingriffsformation gemäß Fig. 45 zusammenwirkt;
- Fig. 46: eine weitere Ausführungsform der Erfindung vor dem Zusammensetzen;
- Fig. 46a: eine Detailansicht der am Halteprofil angeordneten Eingriffsformation der Ausführungsform gemäß Figur 46;
- Fig. 46b: eine Detailansicht der am Aufnahmeprofil angeordneten Eingriffsformation der Ausführungsform gemäß Figur 46;
- Fig. 47: die in Figur 46 gezeigte Ausführungsform der Erfindung nach der Montage ;
- Fig. 48a: ein Aufnahmeprofil gemäß einer Weiterbildung der vorliegenden Erfindung zur Anbringung an der Rückseite eines Solarmoduls;
- Fig. 48b: eine achsorthogonale Schittansicht einer zu Figur 48a alternativen Ausführungsform des Aufnahmeprofils;
- Fig. 49: ein Halteprofil, das in Wechselwirkung mit dem Aufnahmeprofil gemäß Fig. 48a gebracht werden kann; und
- Fig. 50: einen montierten Zustand mit einem Aufnahmeprofil gemäß Fig. 48 und einem Halteprofil gemäß Fig. 49.

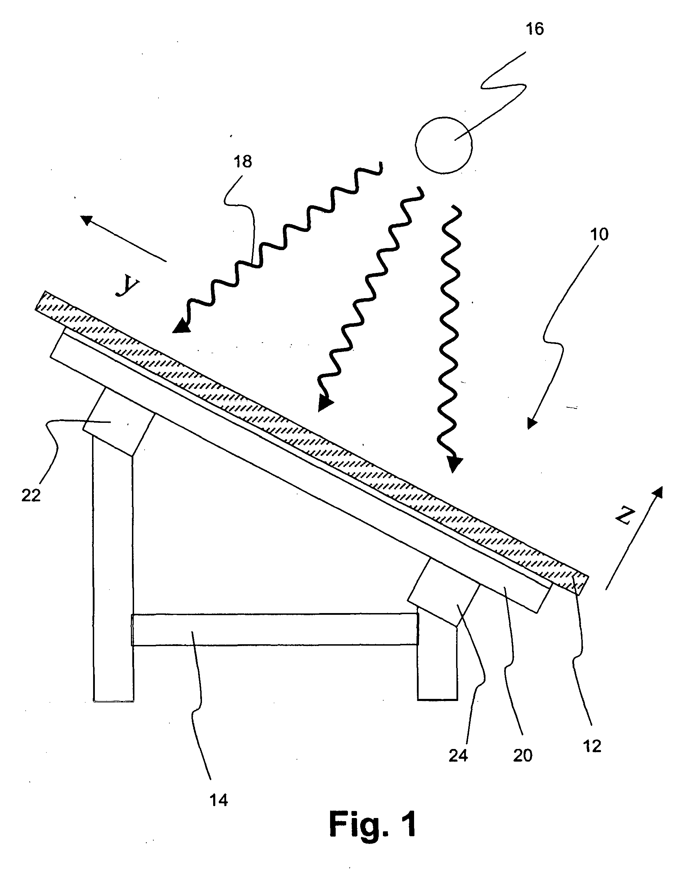

In Fig. 1 ist eine Anordnung 10 zu einem Solarmodul gezeigt, wie sie regelmäßig zur Anwendung kommt, beispielsweise bei photovoltaischen Sonnenkraftwerken. Man erkennt, dass ein Solarmodul 12 auf einem Unterbau 14 angeordnet ist. Das Solarmodul 14 wird von der Sonne 16 mit UV-Strahlen 18 bestrahlt. Das Solarmodul 12 wandelt die UV-Strahlung photovoltaisch in elektrischen Strom um, wie dies an sich bekannt ist. Die Erfindung bezieht sich im wesentlichen auf die Befestigungsstruktur für das Solarmodul 12.

Das Solarmodul 12 ist rahmenlos ausgebildet und verhältnismäßig großflächig, beispielsweise mit Abmessungen von 2,6m x 2,2m. Derartige großflächige Solarmodule müssen an ihrer Rückseite abgestützt werden. Hierzu sind an dem Solarmodul 12 Längsprofile 20 angebracht. Diese Längsprofile 20 sind in regelmäßigen Abständen zueinander an der Rückseite des Solarmoduls 12 befestigt und erstrecken sich im wesentlichen parallel zueinander in Y-Richtung. In zur Zeichenebene orthogonaler X-Richtung verlaufen Querträger 22, 24, die zur Anbringung des Solarmoduls 10 am Unterbau 14 vorgesehen sind.

An die Befestigung der Solarmodule 12 am Unterbau sind verschiedene Anforderungen gestellt. So ist es erforderlich, die Solarmodule weitgehend spannungsfrei am Unterbau 14 zu lagern. Darüber hinaus sollen die Solarmodule 12 einfach montierbar sein und möglichst ohne oder nur mit einer geringen Anzahl zusätzlicher Befestigungsmittel dauerhaft am Unterbau 14 befestigt werden können. Darauf zielt die Erfindung ab.

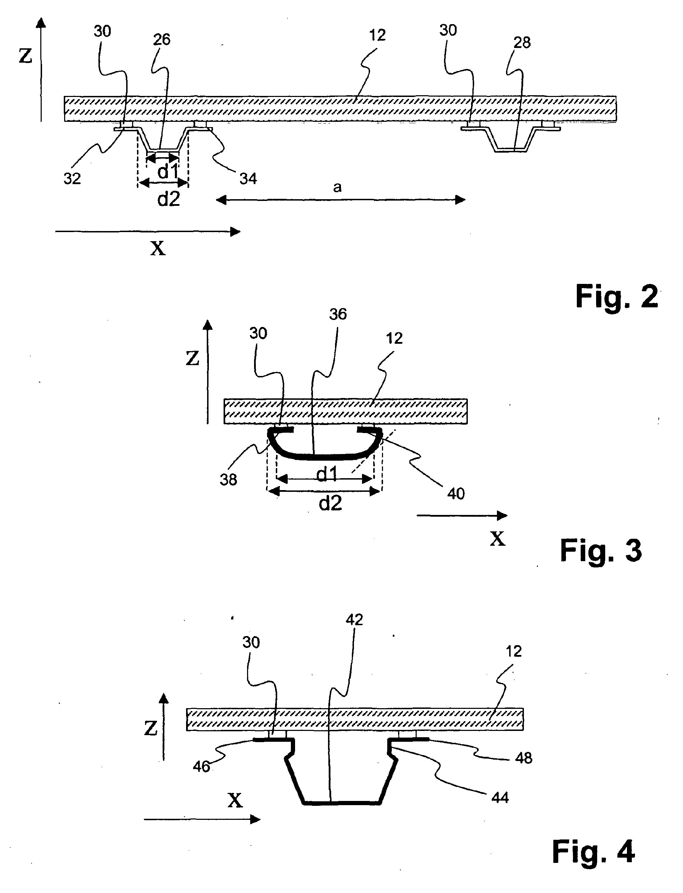

Fig. 2 zeigt eine erfindungsgemäße Ausgestaltung des Solarmoduls 12, wobei nur ein Teil von diesem Solarmodul 12 in X-Richtung gezeigt ist. Man erkennt, dass an der Unterseite des Solarmoduls 12 trapezförmige Profile 26, 28 angebracht sind. Diese sind über mehrere Millimeter dicke Klebstoffschichten 30 mit der Unterseite des Solarmoduls 12 verbunden. Betrachtet man die Profile 26 und 28 genauer, so erkennt man, dass sie in ihrem engsten Bereich eine Weite d1 und in einem Übergangsbereich zu Seitenflügeln 32, 34 eine größere Weite d2 aufweisen. Je nach Größe des Solarmoduls 10 sind mehrere derartiger Profile an seiner Unterseite angebracht, vorzugsweise in einem Abstand a von 60 cm. Es können aber auch größere oder geringere Abstände gewählt werden.

Die Profile 26 und 28 werden im folgenden als Halteprofile bezeichnet, weil diese zum Halten des Solarmoduls 10 vorgesehen sind.

Fig. 3 zeigt nun eine weitere Ausführungsform eines solchen Solarmoduls 12. An diesem ist ein abgerundetes Hohlprofil 36 wiederum über Klebstoffschichten 30 vorgesehen. Dabei erkennt man, dass das Hohlprofil 36 zwei Weiten aufweist, nämlich in seinem schmalsten Bereich die Weite d1 sowie in seinem breitesten Bereich die Weite d2. Die beiden Flügel 38 und 40 sind einwärts gebogen. Auch das Profil 36 dient als Halteprofil, wie im Folgenden im Detail noch erläutert werden wird.

In Fig. 4 erkennt man eine weitere Ausführungsform der Erfindung, mit einer von den Fig. 2 und 3 abweichenden weiteren Profilform. An dem Solarmodul 12 sind wiederum eine Mehrzahl von Halteprofilen 42 über mehrere Millimeter dicke Klebstoffschichten 30 angebracht. Das Halteprofil 42 ist in seinem unteren Bereich ähnlich wie das Halteprofil 26 trapezförmig ausgebildet. Es besitzt jedoch einen eine Eingriffsformation bildenden zurückgesetzten Bereich 44 an seinen beiden Seiten, der eine Hinterschneidung bildet. Von diesem zurückgesetzten Bereich 44 gehen wiederum die beiden Flügel 46 und 48 aus, mit denen das Halteprofil 42 an dem Solarmodul 10 angebracht ist.

In allen drei Figuren 2 bis 4 erkennt man die Orientierung anhand der eingezeichneten X- und Z-Achsen. Ferner ist für alle drei Ausführungsformen ergänzend anzumerken, dass die Klebstoffschicht 30 jeweils elastisch ist und so einen geringfügigen Relativlagenausgleich zwischen dem jeweiligen Halteprofil und dem Solarmodul 12 ebenso wie einen Ausgleich unterschiedlicher thermischer Ausdehnungen aufgrund der unterschiedlichen Materialien des Halteprofils 42 und des Solarmoduls 12 gewährleisten kann.

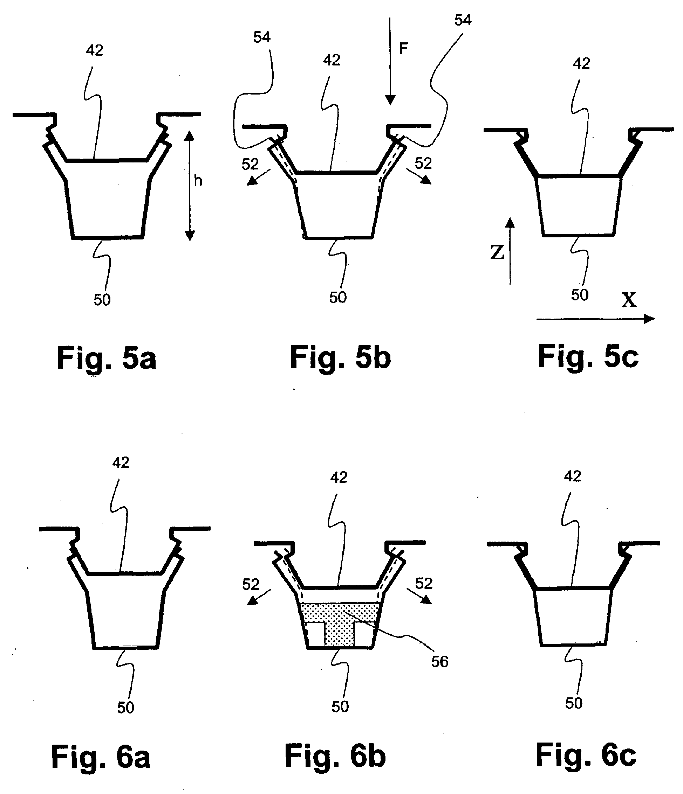

Geht man von der Ausführungsform gemäß Fig. 4 aus und wendet man sich der Darstellung gemäß Fig. 5a bis 5c zu, so erkennt man, dass das Halteprofil 42, das an dem in Fig. 5a bis 5c nicht gezeigten Solarmodul angebracht ist, in ein korrespondierendes Aufnahmeprofil 50 einsetzbar ist. Das Aufnahmeprofil 50 besitzt im wesentlichen komplementäre Profilform, erstreckt sich jedoch über eine größere Höhe h als das Halteprofil 42, wodurch dessen torsionale Steifigkeit und Biegesteifigkeit orthogonal zu seiner Längsachse erhöht wird. Das Aufnahmeprofil 50 ist, wie im Folgenden noch im Detail erläutert wird, mit dem Unterbau verbunden.

In dem Zustand gemäß Fig. 5a liegt das Halteprofil 42 gerade auf dem Aufnahmeprofil 50 auf. Durch Beaufschlagung mit einer Fügekraft F, die beispielsweise im Wesentlichen der auf das Solarmodul wirkenden Schwerkraft entsprechend kann, wird das Aufnahmeprofil 50 gemäß den Pfeilen 52 elastisch aufgeweitet. Der Ausgangszustand ist in Fig. 5b mit strichlierten Linien gezeichnet, wohingegen der aufgeweitete Zustand mit durchgezogener Linie gezeigt ist. Um das Einführen zu erleichtern, weist das Aufnahmeprofil 50 an seinen freien Enden Eingriffsformationen bildende abgefalzte Einführschrägen 54 auf.

Schließlich ist das Halteprofil 42 soweit in das Aufnahmeprofil 50 eingeschoben, dass die abgefalzten Einführschrägen 54 in den Bereich 44 eingreifen können und somit das Halteprofil 42 formschlüssig umklammern. In diesem Zustand wird das Halteprofil 42 von dem Aufnahmeprofil 50 formschlüssig festgehalten. Es stützt sich sowohl seitwärts in x-Richtung als auch in Z-Richtung an dem Aufnahmeprofil 50 ab. Dabei ergibt sich eine zuverlässige Haltefunktion zwischen Aufnahmeprofil 50 und Halteprofil 42 und damit auch zwischen dem mit dem Aufnahmeprofil 50 verbundenen Unterbau und dem mit dem Halteprofil 42 verbundenen Solarmodul. Die Verbindung ist einfach herstellbar, unterliegt keinen oder allenfalls geringfügigen auf das Solarmodul übertragenen Spannungen und ist toleranzausgleichend. Darüber hinaus kommt es aufgrund des Formschlusses zu einem Positioniereffekt des Solarmoduls relativ zum Unterbau in einer gewünschten Sollposition.

Fig. 6a bis 6c zeigen einen mit Fig. 5a und 5c vergleichbaren Montagevorgang, Der einzige Unterschied besteht jedoch darin, dass im Schritt 6b das Aufnahmeprofil 50 mit einem zusätzlichen Montagewerkzeug 56 aufgespreizt wird und die elastische Verformung entsprechend der Pfeile 52 nicht durch Eindrücken des Halteprofils 42 vorgenommen werden muss, sondern dass das Aufnahmeprofil 50 bereits "vorgespreizt" ist.

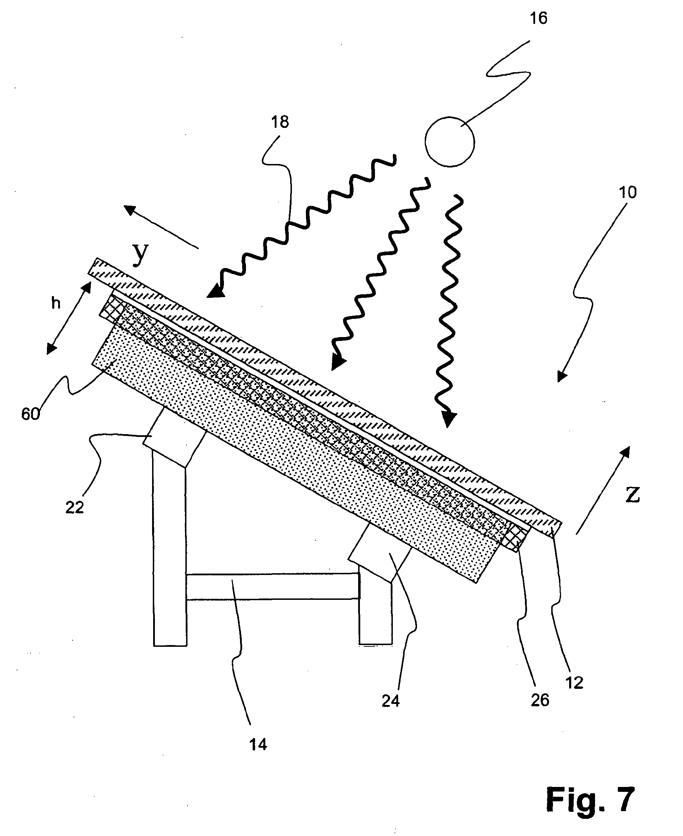

Fig. 7 zeigt ausgehend von der Darstellung gemäß Fig. 1 die erfindungsgemäße Struktur, wobei ein Halteprofil, beispielsweise das trapezförmige Halteprofil 26 gemäß Fig. 2, an dem Solarmodul 12 über die Klebstoffschicht angebracht ist. Das Halteprofil 26 ist in einem korrespondierenden trapezförmigen Aufnahmeprofil 60 mit größerer Höhe h aufgenommen. Das Aufnahmeprofil 60 ist mit den Querträgern 22 und 24, beispielsweise durch Verschraubung, verbunden.

Mit der in Fig. 7 gezeigten Struktur lässt sich auch ein großflächiges Solarmodul 12 ohne weiteres an dem Unterbau 14 anbringen. Verspannungen, wie sie etwa bei herkömmlichen Lösungen aufgrund der Verschraubung auftreten, treten bei dieser Struktur nicht auf. Bedarfsweise können die Halteprofile 60 an den Querträgern 22, 24 mit einem gewissen Spiel in X-Richtung (in Fig. 7 orthogonal zur Zeichenebene) angebracht werden, um einen Toleranzausgleich zu ermöglichen. An sich reicht aber bei Fertigung mit üblicher Genauigkeit der Toleranzausgleich aus, der durch die Elastizität der Klebstoffschicht 30 erreicht wird.

Mit Bezug auf Fig. 7 ist festzuhalten, dass die Länge des Aufnahmeprofils 60 entlang der Profillängsachse kürzer, teilweise sogar erheblich kürzer, gewählt werden kann, als die Länge des Halteprofils 26. Dies liegt daran, dass das Halteprofil 26 über einen großen Bereich in Y-Richtung das Solarmodul 12 abstützen sollte. Das Aufnahmeprofil 60 sollte hingegen dem Halteprofil 26 einen hinreichenden Halt am Unterbau 14 geben und kann zusätzlich eine Flächenstützwirkung bereitstellen. Ferner ist festzuhalten, dass sich das Halteprofil 26 und das Aufnahmeprofil 60 ergänzen. Das Halteprofil 26 stützt einen großen Bereich des Solarmoduls 12 ab. Die Biegesteifigkeit wird aber im wesentlichen über das wesentlich tiefere Aufnahmeprofil 60 erreicht. Dessen Länge und Höhe/Tiefe lassen sich an den jeweiligen Einsatzfall (Belastung durch Schneelast, Wind, etc.) anpassen. Die Aufteilung zwischen relativ flachem Halteprofil 26 und relativ tiefem Aufnahmeprofil 60, dessen Dimensionen bedarfsweise gewählt werden, hat den Vorteil, dass mit Halteprofilen 26 versehene Solarmodule 12 platzsparend gestapelt und so transportiert werden können. Die tiefen Aufnahmeprofile können zum Transport ineinander gesteckt und so gestapelt werden. Dadurch lassen sich diese ebenfalls raumsparend transportieren. Außerdem können standardisierte Solarmodule mit ein und denselben Halteprofilen 26 verwendet werden und nur die Aufnahmenprofile 60 je nach Bedarf an die zu erwartenden Belastungen angepasst werden.

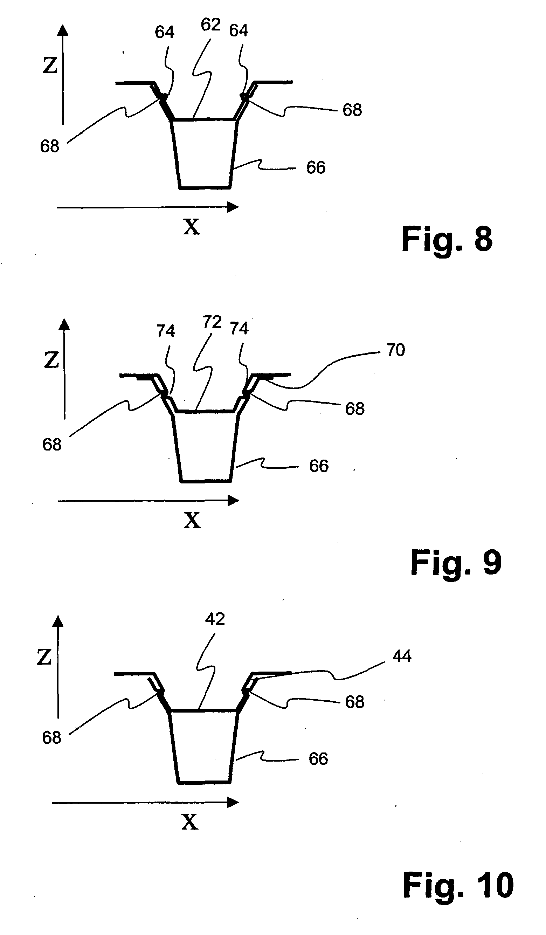

Mit Bezug auf die Fig. 8 bis 21, 22, 26a und 26b werden im Folgenden Details zu verschiedenen Ausführungsformen und Gestaltungen von Aufnahmeprofilen und Halteprofilen und sich daraus ergebenden Effekten diskutiert.

Es sei angemerkt, dass die folgende Beschreibung keine abschließende Aufzählung erfindungsgemäßer Aufnahmeprofile und Halteprofile ist, sondern vielmehr vorteilhafte Ausführungsformen zeigt, die vom-Fachmann bedarfsweise auch noch abgeändert oder untereinander kombiniert werden können, wobei sie dennoch vom Schutzumfang der Patentansprüche mit umfasst sind. Sämtliche dieser Profile sind dazu vorgesehen, in an sich bereits beschriebener Weise am Solarmodul, beispielsweise durch Verkleben, befestigt zu werden sowie am Unterbau mit oder ohne Toleranzausgleich angebracht zu werden.

In Fig. 8 ist ein Halteprofil 62 gezeigt, das einen trapezförmigen Grundkörper aufweist. Im Bereich der schrägen Trapezflächen sind entlang der Profillängsachse (parallel zur Y-Achse) in Längsrichtung verlaufende durch Umformen hergestellte Knickstellen bzw. Sicken 64 vorgesehen. Diese können parallel oder auch geneigt zur Profillängsachse verlaufen, um den im Folgenden noch Im Detail erläuterten Anzugeffekt zu erreichen.

Fig. 8 zeigt ein korrespondierendes Aufnahmeprofil 66, das sich nach oben aufweitet. An den zu den schrägen Trapezflächen korrespondierenden Schrägflächen sind entsprechende durch Umformen hergestellte Hinterschneidungen bildende Knickstellen 68 vorgesehen, die in der in Fig. 8 gezeigten montierten Stellung in die Knickstellen 64 eingreifen. Die Montage erfolgt in gleicher Weise, wie mit Bezug auf Fig. 5a bis 5c, bzw. 6a bis 6c erläutert.

Fig. 9 zeigt eine gegenüber Figur 8 abgewandelte Ausführungsform. Das Aufnahmeprofil 66 bleibt gegenüber dem Aufnahmeprofil 66 aus Fig. 8 weitgehend unverändert. Lediglich an den freien oberen Endbereichen sind Flügelabschnitte 70 vorgesehen, auf denen ein abgewandeltes Halteprofil 72 aufliegt. Das Halteprofil 72 ist wiederum trapezförmig ausgebildet und weist an seinen schrägen Trapezflächen nach außen vorspringende. Vorsprünge bildende Knickabschnitte 74 auf. Mit diesen steht es in Eingriff mit den Knickstellen 68 des Aufnahmeprofils 66. Die Montage erfolgt wie mit Bezug auf Fig. 5a bis 5c bzw. 6a bis 6c erläutert.

Bei der Ausführungsform gemäß Fig. 10 handelt es sich um eine Kombination eines Aufnahmeprofils 66, wie in Fig. 8 gezeigt, mit den bereits beschriebenen durch Umformen hergestellten Abschnitten 68, die nach innen vorstehen. In dieses Aufnahmeprofil 66 ist ein Halteprofil 42 eingefügt, das In seiner Grundkonfiguration etwa dem Halteprofil 42 gemäß Fig. 4 entspricht. Dabei greifen die gefalteten Abschnitte 68 des Aufnahmeprofils 66 in die Eingriffsformationen bildende Hinterschneidungen 44 am Halteprofil 42.

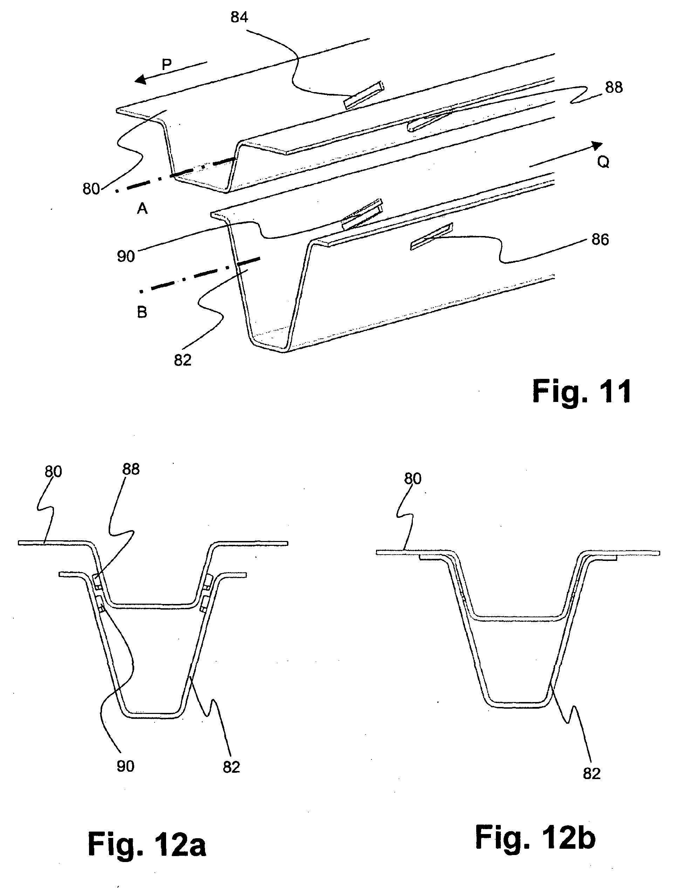

Fig. 11, 12a und 12b zeigen eine weitere Ausführungsform der Erfindung. Man erkennt in Fig. 11, ein Halteprofil 80 und ein Aufnahmeprofil 82. Sowohl das Halteprofil, als auch das Aufnahmeprofil weist eingeschnittene Bereiche 84, 86 auf, aus denen Laschen 88, 90 herausgebogen sind. Man erkennt, dass sich die eingeschnittenen Bereiche 84, 86 sowie die daraus herausgebogenen Laschen 88, 90 nicht parallel, sondern vielmehr schräg zur Richtung einer jeweiligen Profillängsachse A bzw. B erstrecken. Man erkennt auch, dass beim Aufnahmeprofil 82 die Laschen 90 profil-einwärts gebogen sind, wohingegen beim Halteprofil 80 die Laschen 88 profilauswärts gebogen sind. Dies führt dazu, dass, wie in Fig. 12a gezeigt, beim Einsetzen des Halteprofils 80 in das Aufnahmeprofil 82 die Laschen 88 sowie 90 miteinander in Wechselwirkung treten, und schließlich aneinander abgleiten.

Während der Montage wird das Halteprofil 80 derart in das Aufnahmeprofil 82 eingesetzt, dass die Laschen 88 die Laschen 90 hintergreifen und umgekehrt, so dass die Laschen 88 in die ausgeschnittenen Bereiche 86 des Aufnahmeprofils gelangen, wobei gleichzeitig die Laschen 90 des Aufnahmeprofils in die ausgeschnittenen Bereiche 84 des Halteprofils gelangen.

Erfolgt beim Zusammensetzen der beiden Profile 80 und 82 zugleich eine Relativbewegung, wie durch die Pfeile P und Q angedeutet, beispielsweise derart, dass - wie in Fig. 7 gezeigt - das Solarmodul bezüglich der Horizontalen geneigt an dem Unterbau angebracht wird und aufgrund seiner Schwerkraft entsprechend dem Pfeil P relativ zum Aufnahmeprofil 82 bewegt wird, so gleiten die einzelnen Laschen 88 und 90 aneinander ab und wirken wie Keile oder Anzugschrägen, so dass die beiden Profile 80 und 82 wegen der Keilwirkung aufeinander zu gezogen und miteinander verkeilt werden. Schließlich kommt es zu dem Zustand, wie in Fig. 12 b gezeigt, bei dem die beiden Profile 80 und 82 fest miteinander verbunden sind und wegen der sich gegenseitig hintergreifenden Laschen 88 und 90 sowie Aufnahmebereiche 84 und 86 nur unter erheblichem Kraftaufwand voneinander trennbar sind.

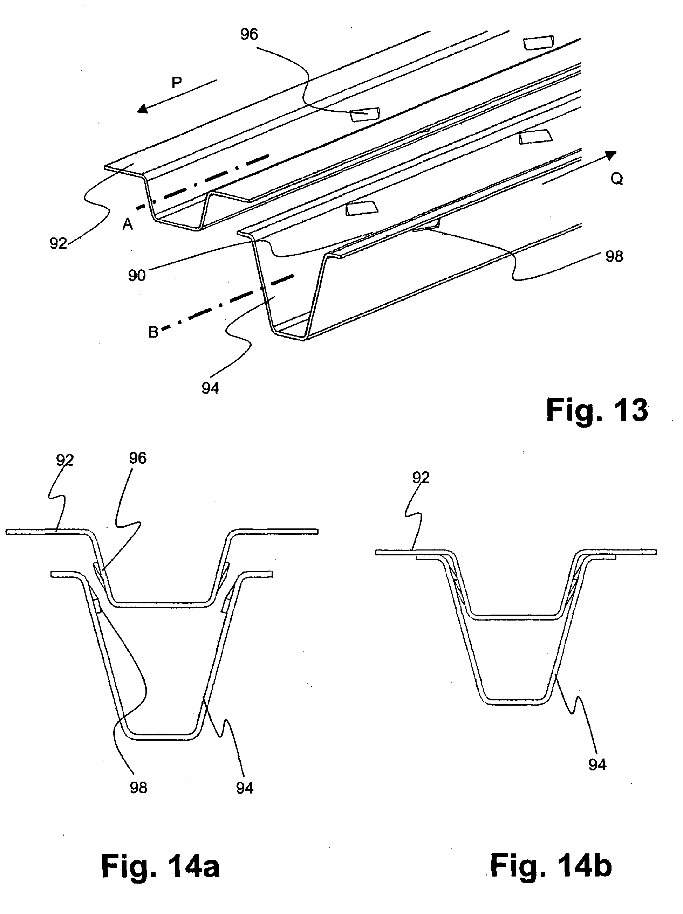

Fig. 13, 14a und 14b zeigen eine ähnliche Lösung, wie mit Bezug auf Fig. 11, 12a und 12b beschrieben, wobei die Laschen nur geringfügig aus den Profilen herausgebogen sind. Man erkennt ein Halteprofil 92 und ein Aufnahmeprofil 94, die jeweils mit Laschen 96 bzw. 98 ausgebildet sind. Die Funktionsweise ist an sich dieselbe, wie ausführlich mit Bezug auf Fig. 11, 12a und 12b beschrieben.

Es sei darauf hingewiesen, dass die Laschen 96 und 98 auch durch reine Sicken ohne Verletzung des Profilmaterials, d.h. reine Ausprägungen, ersetzt werden können, die in gleicher Weise zusammenwirken, wie die vorstehend beschriebenen Laschen und Ausnehmungen.

Wiederum ist der Verlauf der Laschen 96, 98 bzw. Ausprägungen schräg zur Profillängsachse A bzw. B, so dass es bei der Montage, beispielsweise schwerkraftbedingt, zu dem vorstehend beschriebenen Anzugseffekt der beiden Profile zueinander kommt.

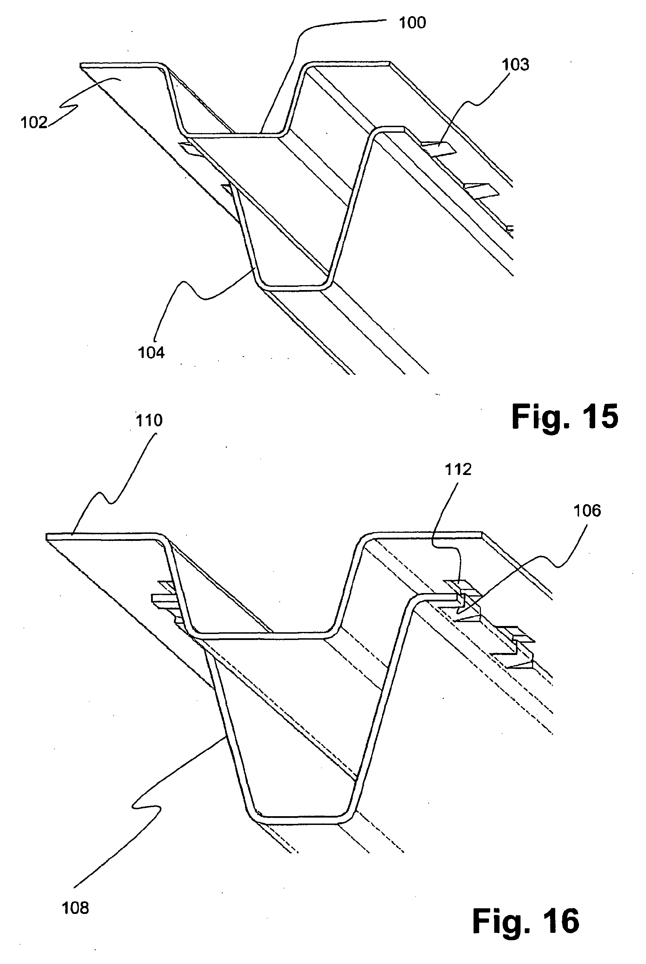

Fig. 15 zeigt eine weitere Ausführungsform der Erfindung. Bei dieser sind an einem trapezförmigen Halteprofil 100 im Bereich seiner Flügel 102 Laschen leicht aus der Profilebene herausgebogen, welche am seitlichen Rand eines Aufnahmeprofils 104 angreifen. Dadurch können unerwünschte Aufspreizeffekte verhindert werden. Derartige Laschen lassen sich auch bei Profilen verwenden, wie sie vorstehend mit Bezug auf Fig. 8 bis 14 beschrieben wurden.

Fig. 16 zeigt eine Alternative zu der Ausführungsform nach Fig. 15. Bei dieser Ausführungsform werden unerwünschte Aufspreizungen durch Anschlagelemente bildende Laschen 106 verhindert, die an dem seitlichen Abschnitt eines Aufnahmeprofils 108 vorgesehen sind und die bei der Montage mit einem Halteprofil 110 in korrespondierende Anschlagelemente bildende Ausschnitte 112 eingreifen.

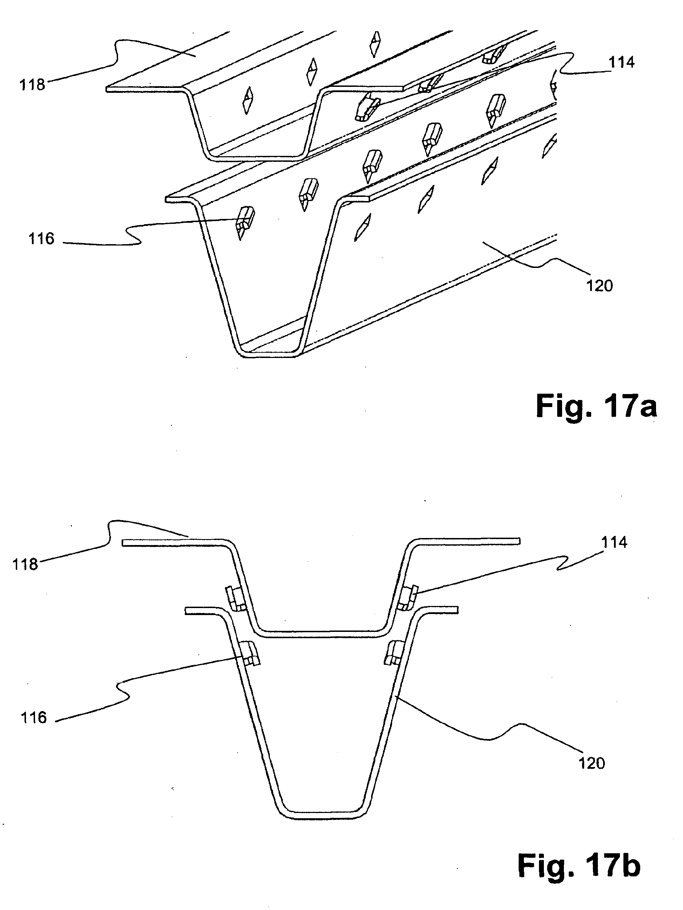

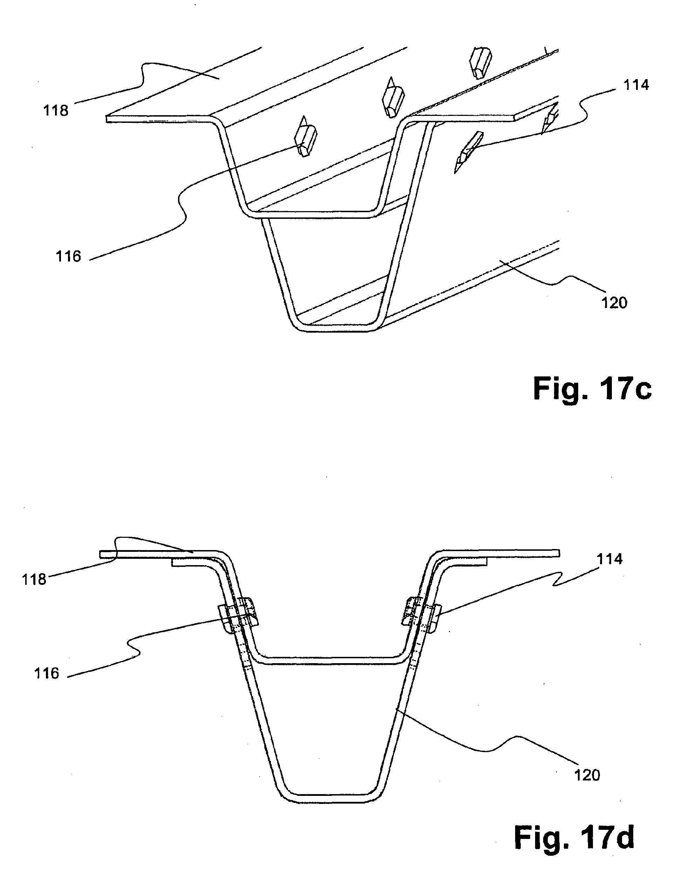

Fig. 17a bis 17d zeigen eine Weiterbildung der Ausführungsformen nach Fig. 11, 12a und 12b. Dabei sind die durch Einschneiden und Herausbiegen hergestellte, Ausklinkungen bildende Laschen 114 und 116 von Halteprofil 118 und Aufnahmeprofil 120 hakenförmig ausgebildet, wie auch klar in Fig. 17b zu erkennen. In Fig. 17c und 17d erkennt man, dass diese hakenförmigen Laschen dann in die Ausnehmungen eingreifen und diese quasi umgreifen, so dass der Halt von Aufnahmeprofil und Halteprofil aneinander weiter gesteigert werden kann. Wiederum erstrecken sich die Laschen schräg zur Profillängsachse, um den vorstehend beschriebenen Anzugeffekt zu erreichen.

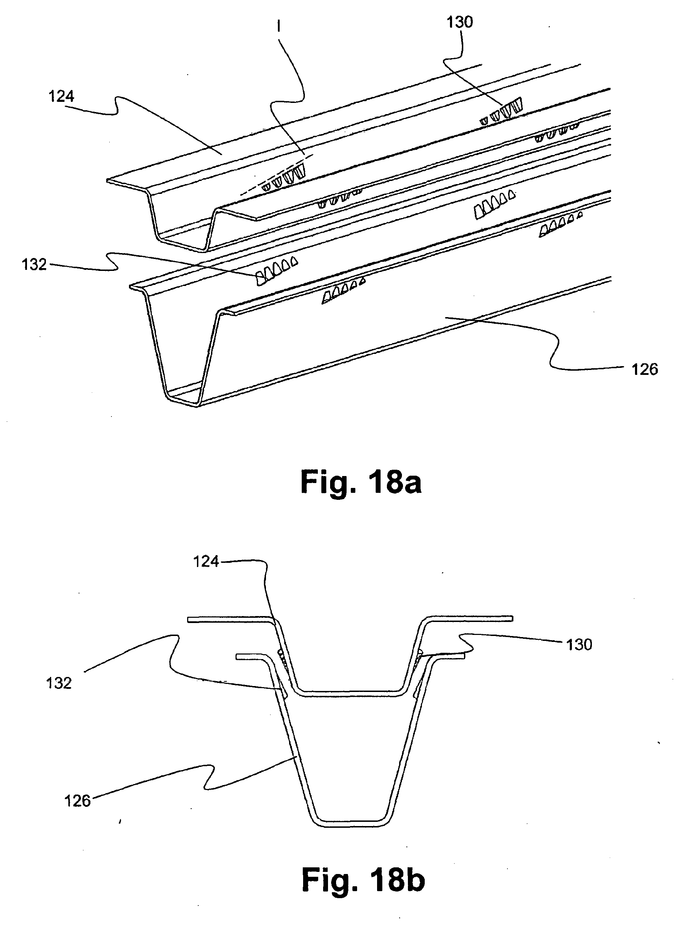

Figuren 18a und 18b zeigen eine weitere Ausführungsform der Erfindung, bei der an dem Halteprofil 124 sowie an dem Aufnahmeprofil 126 jeweils eine Reihe von Sicken 130 beziehungsweise 132 angeordnet sind. Dabei handelt es sich um lokale Deformationen, die sich von dem Halteprofil 124 nach außen und von dem Aufnahmeprofil 126 nach innen erstrecken. Die einzelnen Sicken besitzen im Wesentlichen die Form eines Kegelabschnitts, wobei jede Reihe 130, 132 von Sicken auf einer gedachten Linie I endet, die in Figur 18a strichliert eingezeichnet ist. Dadurch ergeben sich Anlagebereiche, nämlich entlang der definierten Linien I der jeweiligen Reihen 130 und 132 von Sicken, die in gleicher Weise, wie mit Bezug auf Figuren 11 oder 13 beschrieben, miteinander in Eingriff gebracht werden können.

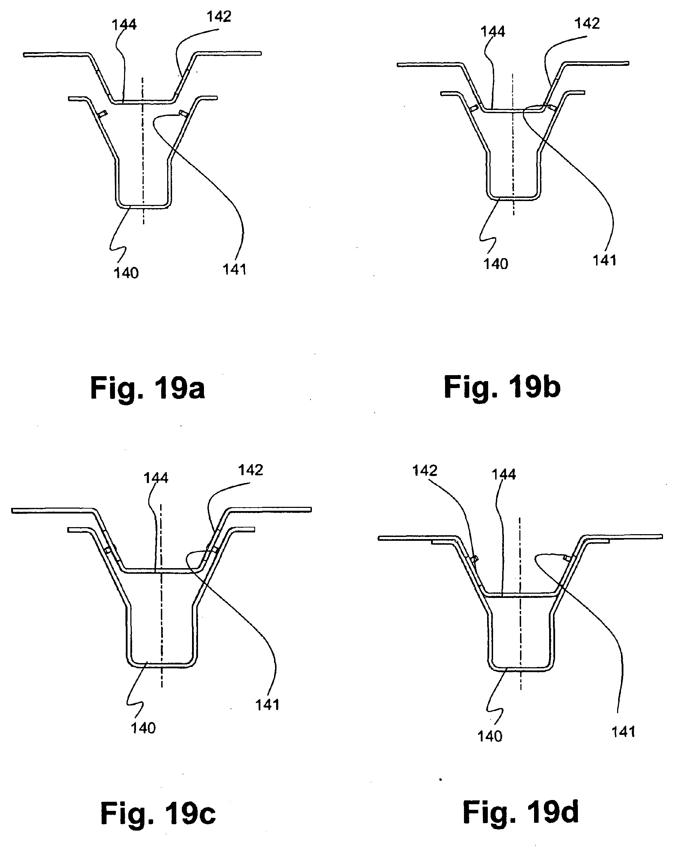

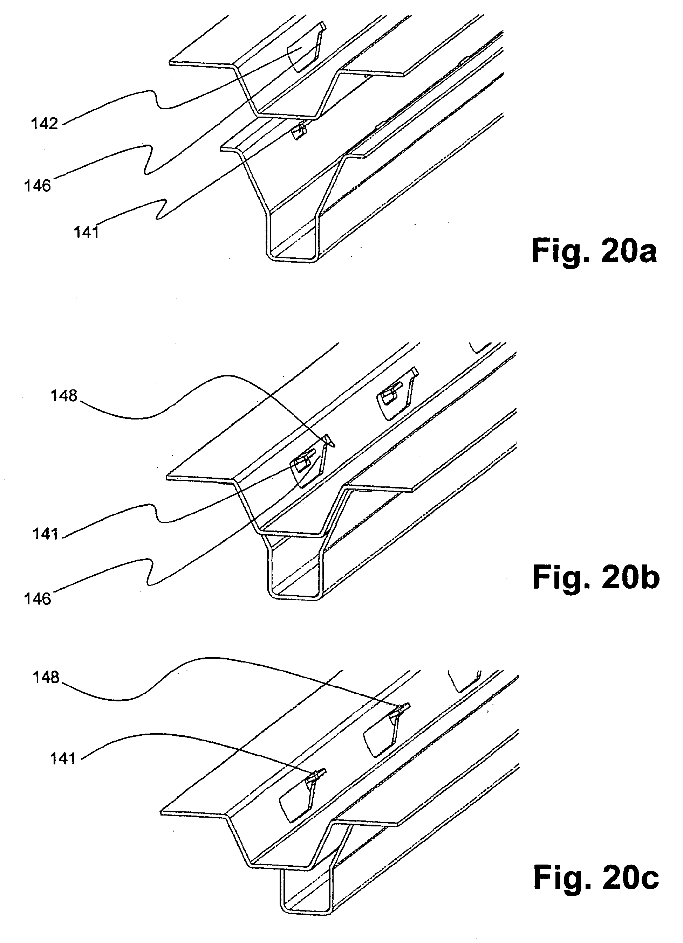

Figuren 19a bis 19d zeigen eine weitere Ausführungsform der Erfindung in verschiedenen Phasen während der Montage. Bei dieser Ausführungsform sind an einem Aufnahmeprofil 140 einwärts gebogene Laschen 141 vorgesehen, die sich jedoch nicht schräg zur Profillängsachse, sondern parallel zu dieser erstrecken. Diese werden in korrespondierende Ausnehmungen 142 in dem Halteprofil 144 eingesetzt, wie in Figuren 20a bis 20c gezeigt. Um den vorstehend beschriebenen Anzugeffekt im Falle einer Relativbewegung der Profile zueinander zu erreichen, besitzen diese Ausnehmungen 142 auch schräge Abschnitte 146, an denen die Laschen 141 unter Anzugwirkung entlang gleiten können, bis sie in eine vorgegebene Sollposition definierenden Fixierabschnitte bildenden Aufnahmeschlitzen 148 aufgenommen werden. Dieser Zustand der erreichten Sollposition ist in Figur 20c gezeigt.

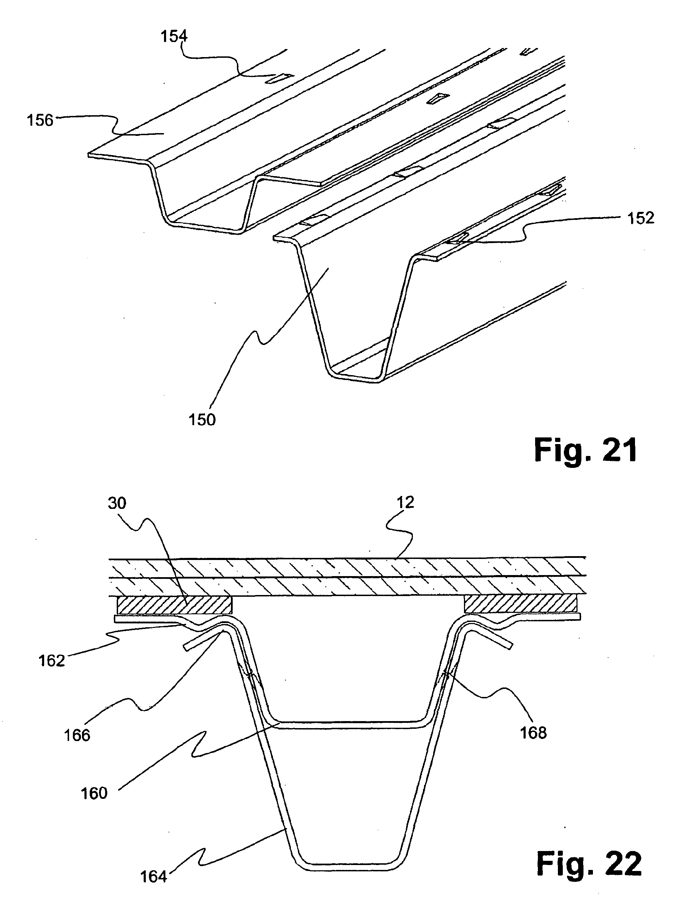

In Figur 21 erkennt man eine weitere Ausführungsform der Erfindung, bei der ein Aufspreizen des Aufnahmeprofils verhindert werden soll. Hierfür sind am Aufnahmeprofil 150 an der Profiloberseite keilförmige Sicken 152 vorgesehen, die mit korrespondierenden keilförmigen Sicken 154 an einem Halteprofil 156 in Eingriff gelangen. Auch dieser Eingriff verstärkt sich schwerkraftbedingt während der Montage durch eine Relativbewegung zwischen Halteprofil 156 und Aufnahmeprofil 150.

Figur 22 zeigt schließlich eine weitere Ausführungsform der Erfindung. Man erkennt, dass an dem Solarmodul 12 über die Klebstoffschichten 30 ein Halteprofil 160 angebracht ist, das im Bereich der Klebestoffschichten 30 nahe dem Übergang zu den schrägen Trapezflächen in Profillängsrichtung verlaufende Ausprägungen 162 aufweist. Dieses Halteprofil 160 ist in einem Aufnahmeprofil 164 aufgenommen, welches mit seinen oberen freien Enden in einem spitzen Winkel bei 166 gefalzt ist. Mit diesem Falzbereich 166 greift es zwischen die Ausprägungen 162 und die schrägen Trapezflächen des Halteprofils 160. Dadurch wird ein Aufspreizen verhindert des Aufnahmeprofils 164. Ferner erkennt man an den schrägen Trapezflächen Eingriffstrukturen, wie sie vorstehend beschrieben wurden, beispielsweise Laschen oder Sicken.

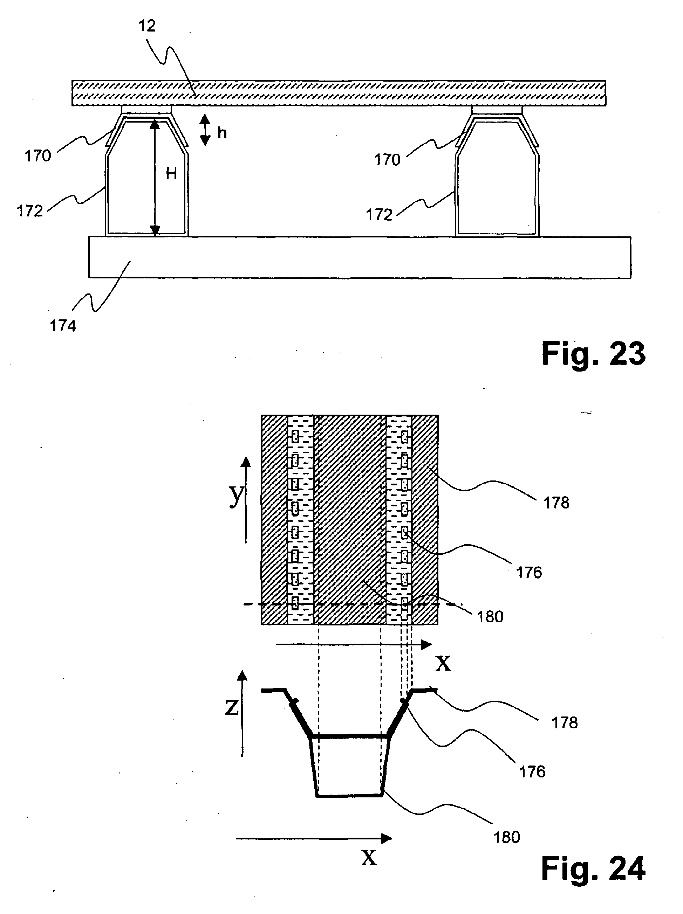

Fig. 23 zeigt ein weiteres erfindungsgemäßes Ausführungsbeispiel in einer Ansicht ähnlich Fig. 2, wobei die Aufnahmeprofile 170 an dem Solarmodul 12 angebracht sind. Die Aufnahmeprofile 170 besitzen nur relativ geringe Höhe h. Die Aufnahmeprofile 170 nehmen Halteprofile 172 auf, die zum Erreichen einer hohen Biegesteifigkeit mit einer wesentlich größeren Höhe H ausgebildet sind. Diese ist wenigstens 1,5 mal so groß wie die Höhe h. Die Halteprofile 172 sind ihrerseits an Querstreben 174 des Unterbaus befestigt

Fig. 24 zeigt für ein Ausführungsbeispiel, wie es in Fig. 17a bis 17c gezeigt ist, dass durch eine Vielzahl von Verbindungsstellen 176 zwischen einem Haltprofil 178 und einem Aufnahmeprofil 180 die Festigkeit der Verbindung bedarfsweise erhöht werden kann. Dies führt zu einem vorteilhafteren Biegeverhalten der Befestigungsstruktur, das mit dem Biegeverhalten eines in der Mechanik wohl bekannten Doppel-T-Trägers vergleichbar ist.

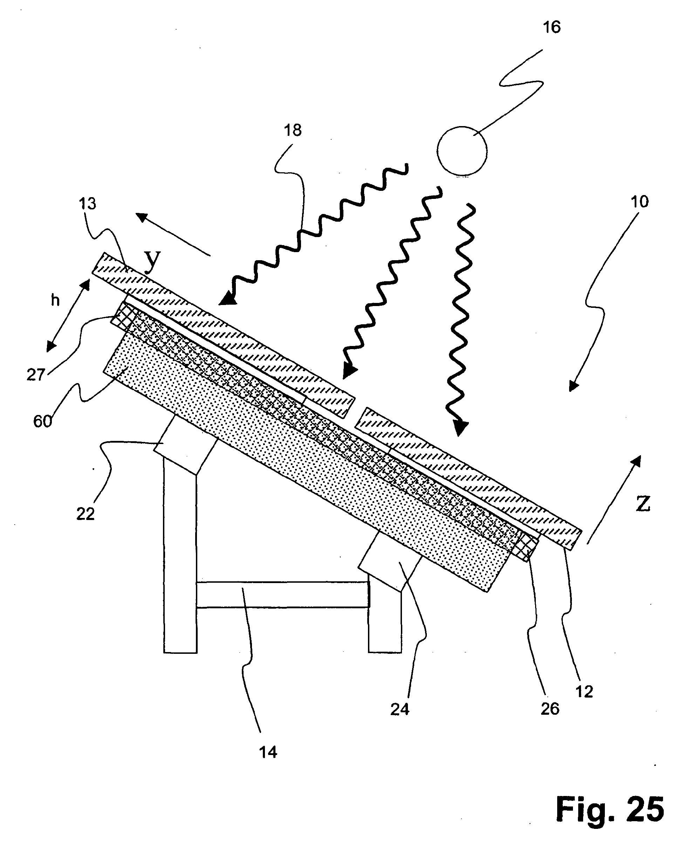

Fig. 25 zeigt eine weitere erfindungsgemäße Anordnung entsprechend Fig. 7, wobei jedoch zwei oder mehr kleinere Solarmodule 12 und 13 mit an diesen angeordneten Halteprofilen 26 und 27 an ein und demselben Aufnahmeprofil 60 angeordnet sind.

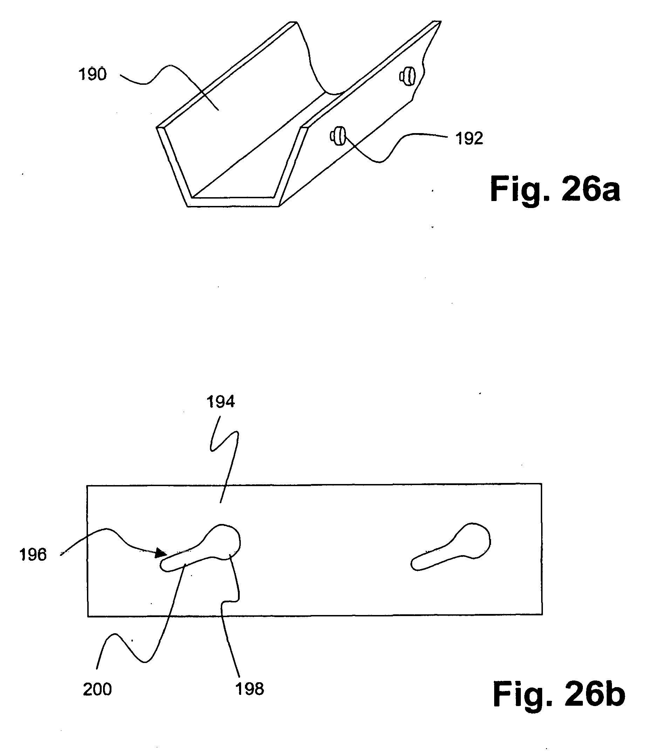

Bei der erfindungsgemäßen Ausführungsform nach Fig. 26a und 26b sind am solarmodulseitigen Halteprofil 190 jeweils T-Bolzen 192 mit Kopf angebracht, die in entsprechende Aufnahmeöffnungen 194 an einem korrespondierenden Aufnahmeprofil 196 (in Fig. 26 in der Seitenansicht gezeigt) aufnehmbar sind. Jede Aufnahmeöffnung 194 weist einen durchmessergroßen Einführabschnitt 198 und einen durchmesserreduzierten Führungsabschnitt 200 auf, die von dem Kopf des jeweils eingeführten T-Bolzens 192 hintergriffen wird. Durch den geneigten Verlauf des Führungsabschnitts 200 erreicht man den vorstehend mehrfach erwähnten Anzugeffekt.

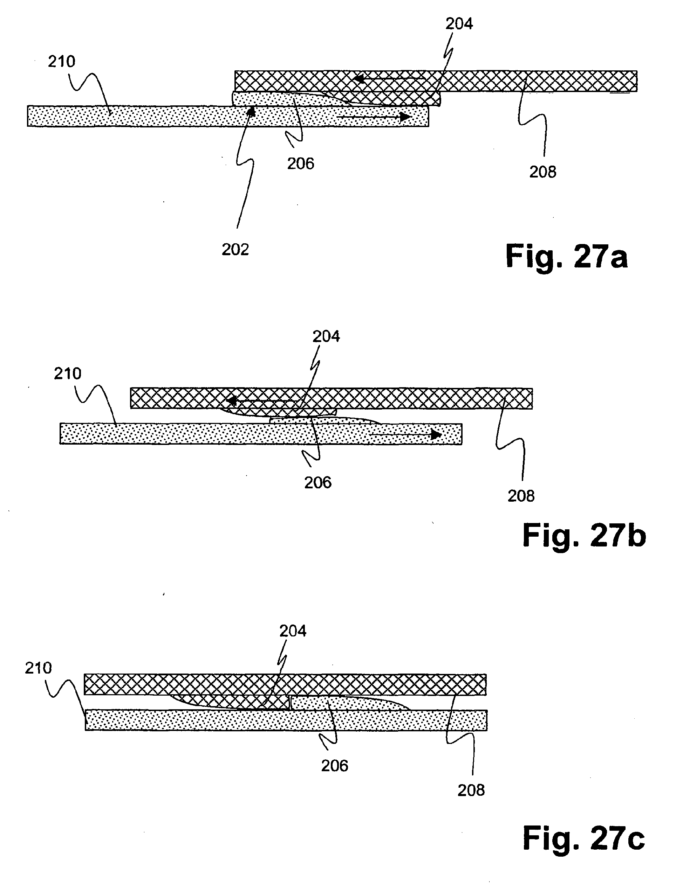

Fig. 27a bis 27c zeigen eine Verrastungsstruktur 202, wobei korrespondierende Rastnasen 204, 206 an einem Halteprofil 208 und an einem Aufnahmeprofil 210 angebracht sind. Beim Zusammenstecken dieser beiden Profile 204, 206 im Rahmen der Montage des Solarmoduls können die Rastnasen aneinander unter elastische Deformation vorbeigleiten (Fig. 27a, b) und schließlich miteinander verrasten (Fig. 27c). So ergibt sich eine nur mit erheblichem Aufwand lösbare Verbindung, die unter anderem einen guten Diebstahlschutz bieten kann.

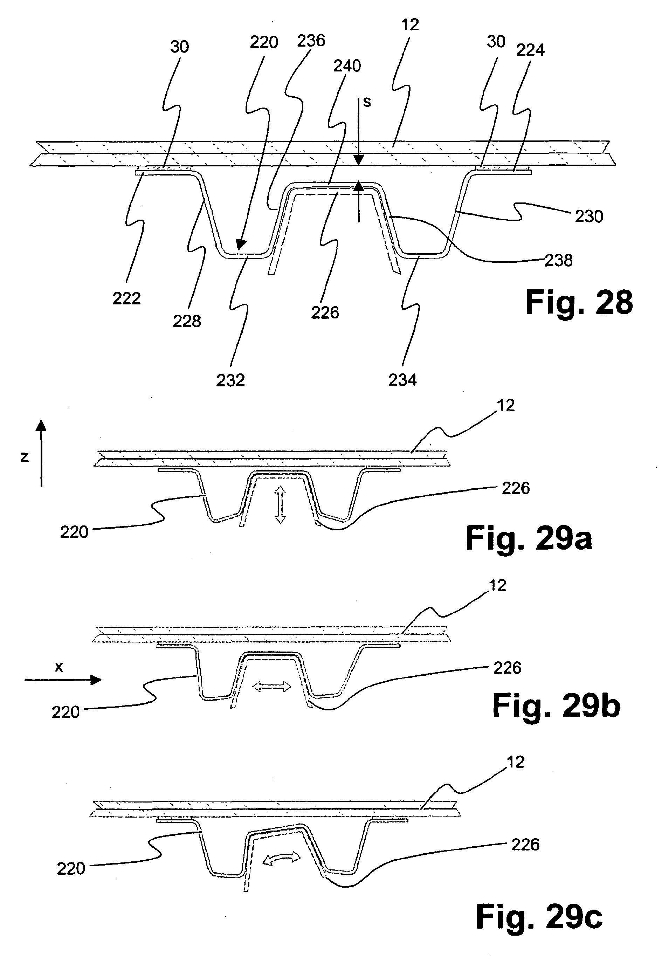

In Fig. 28 ist eine weitere erfindungsgemäße Ausgestaltung eines Solarmoduls 12 gezeigt, bei der ein Aufnahmeprofil 220 an der Rückseite des Solarmoduls 12 angebracht ist. Das Aufnahmeprofil 220 weist W-förmige Gestalt auf mit zwei Flügelabschnitten 222 und 224, die mit Klebstoffschichten 30 an der Rückseite des Solarmoduls 12 angebracht sind. Zwischen den beiden flügelartigen Abschnitten 222 und 224 erstreckt sich etwa mittig ein Aufnahmeabschnitt, in dem ein an einem Unterbau fest angebrachtes Halteprofil 226 formschlüssig aufgenommen ist. Dieses Halteprofil 226 weist Trapezform auf, etwa so, wie mit Bezug auf Fig. 2 beschrieben.

Das solarmodulseitige Aufnahmeprofil 220 besitzt verschiedene Abschnitte. Ausgehend von den beiden Flügelabschnitten erstreckt es sich zunächst mit einem schräg zu den Flügelabschnitten 222, 224 angestellten Bereich 228, 230. Dieser geht über in im Wesentlichen parallel zu den Flügelabschnitten 222, 224 verlaufenden Abschnitte 232, 234, an die sich dann zwei schräg einwärts verlaufende Abschnitte 236, 238 anschließen. Diese beiden schräg verlaufenden Abschnitte 236 und 238 gehen dann wieder über in einen im Wesentlichen parallel zu den Flügelabschnitten 222 und 224 verlaufenden Mittelabschnitt 240. Die Abschnitte 236, 238 und 240 bilden den Aufnahmebereich für das Halteprofil 226.

Man erkennt in Fig. 28, dass der Bereich 240 gegenüber den Flügelabschnitten 222 und 224 nach unten zurückversetzt ist, so dass sich zwischen dem mittleren Abschnitt 240 und der Rückseite des Solarmoduls 12 ein Abstand s ergibt. Mit anderen Worten ist der mittlere Abschnitt 240 relativ zum Solarmodul 12 frei und kann sich im Rahmen elastischer Deformationen des Profils 220 bewegen, ohne dass er dabei das Solarmodul 12 berührt.

Die Verbindung zwischen Halteprofil 226 und Aufnahmeprofil 220 erfolgt in gleicher Weise, wie voranstehend für verschiedene Ausführungsbeispiele beschrieben, d.h. über entsprechende Hinterschneidungen, Sicken oder dergleichen.

In Fig. 29a bis 29c erkennt man verschiedene Deformationsfälle in leicht übertriebener Darstellung. Fig. 29a zeigt, dass mit dem Aufnahmeprofil 220 ein Toleranzausgleich in z-Richtung möglich ist, beispielsweise dann, wenn mehrere Halteprofile 226 in unterschiedlicher Höhenlage angeordnet sind. Entsprechend verformt sich das Aufnahmeprofil 220 derart, dass die beiden Abschnitte 232 und 234 nach oben ausgelenkt werden und so entsprechend dem Doppelpfeil bei im Wesentlichen gleichbleibender Lage des Solarmoduls 12 einen Ausgleich von Höhendifferenzen erfolgen kann. Der Doppelpfeil gemäß Fig. 29a zeigt an, dass ein Toleranzausgleich auch nach unten erfolgen kann.

Fig. 29b zeigt die Möglichkeit eines seitlichen Toleranzausgleichs in x-Richtung. Auch im Falle eines solchen Toleranzausgleichs, beispielsweise dann, wenn sich das Halteprofil 226 nicht in seiner Soll-Lage in x-Richtung befindet, kann sich das Aufnahmeprofil 220 elastisch deformieren und so für eine hinreichende Aufnahme des Halteprofils 226 sorgen.

Schließlich zeigt die Darstellung gemäß Fig. 29c die Möglichkeit eines Toleranzausgleichs bei leicht verdrehter oder verkippter Ausrichtung des Halteprofils 226 am Unterbau.
Die Flexibilität bzw. elastische Deformierbarkeit des Aufnahmeprofils 220 lässt sich je nach Wunsch einstellen. So ist es möglich, dass die Verbindungsbereiche zwischen den Abschnitten 222 bis 240 durch geeignete Materialwahl, Einstellung der Materialdicke, geometrische Deformation (mittels scharfkantiger oder harmonischer Übergänge sowie durch Anbringen von Sicken oder dergleichen) je nach Bedarf eingestellt werden. So kann beispielsweise ein leicht elastisch deformierbares dünnwandiges Material verwendet werden, um unter geringen Kräften einen Toleranzausgleich gemäß den Fig. 29a bis 29c zu gewährleisten. Andererseits lassen sich die Übergangsbereiche zwischen den Abschnitten 222 bis 240 durch Ausbildung des Aufnahmeprofils mit entsprechend größerer Wandstärke steifer ausführen. Auch die einzelnen Abschnitte 228 bis 240 können je nach Bedarf mit größerer oder kleinerer Wandstärke sowie mit oder ohne Versteifungsrippen oder Sicken oder durch abschnittsweises Herausnehmen von Material ausgebildet werden, um so gezielt deren Deformationsverhalten je nach Bedarf einzustellen.

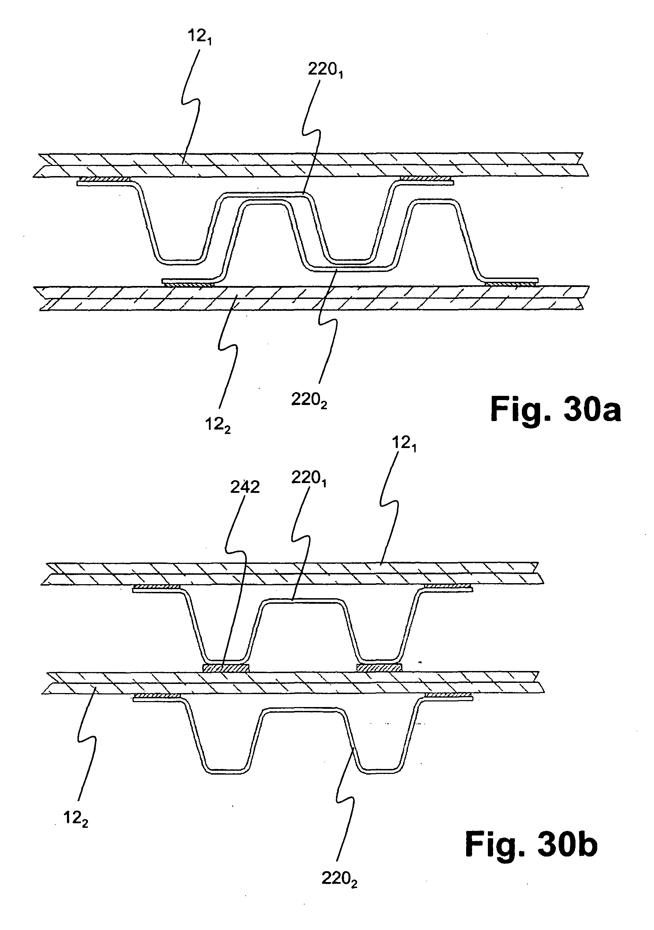

Die Geometrie des Aufnahmeprofils 220 gemäß Fig. 28 bietet auch Vorteile hinsichtlich eines Transports mehrerer Solarmodule. So zeigt Fig. 30a, dass zwei Solarmodule 12₁ und 12₂ mit jeweils zugehörigen Aufnahmeprofilen 220₁ und 220₂ derart aneinander angebracht sind, dass die beiden Aufnahmeprofile 220₁ und 220₂ einander zugewandt sind und ineinander greifen. Dadurch lassen sich diese Solarmodule platzsparend und ohne die Gefahr aufeinander stapeln, dass sie sich gegenseitig beschädigen.

Eine andere Anordnung, bei der die Solarmodule 12₁ und 12₂ gleichgerichtet aufeinander gestapelt sind, ist in Fig. 30b gezeigt. In dieser Darstellung erkennt man, dass zum Schutze der Oberfläche des unteren Solarmoduls 12₂ Kissen oder Elemente 242 aus elastisch polsterndem Material, beispielsweise Schaumstofflagen, vorgesehen sind.

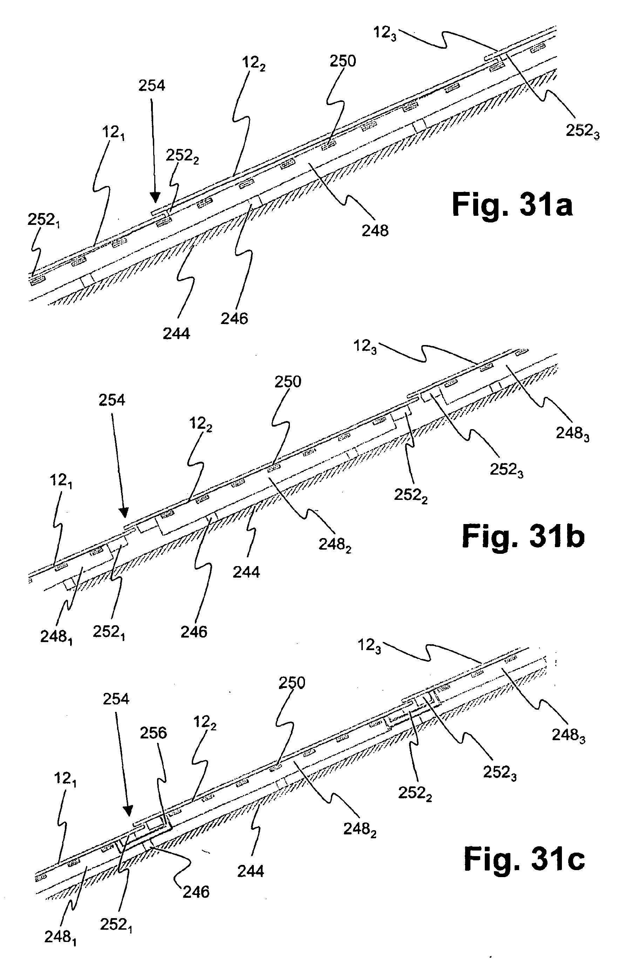

Fig. 31a zeigt eine Anordnung, bei der mehrere Solarmodule 12₁, 12₂, 12₃ auf einem Dach 244 angebracht sind. Auf dem Dach sind Querstreben 246 vorgesehen, die längliche Aufnahmeprofile 248 am Dach 244 fixieren. Die Halteprofile weisen Eingriffsformationen 250 auf, wie vorangehend bereits beschrieben. Man erkennt ferner, dass an jedem Solarmodul 12₁, 12₂, 12₃ Halteprofile 252₁, 252₂, 252₃ angebracht sind. Diese besitzen in Längsrichtung von unten nach oben abnehmende Höhe, so dass der jeweils untere Teil des zugeordneten Solarmoduls sich in größerem Abstand von der Oberseite des Halteprofils 248 befindet, als der obere Teil des Solarmoduls, der an letzterem anliegt. Dadurch sind die Solarmodule 12₁, 12₂, 12₃ schuppenartig auf dem Dach 244 angeordnet und überlappen sich in übereinanderliegenden Überlappungsbereichen 254, was insbesondere bei einer Anordnung auf Dächern vorteilhaft ist. Dadurch kann Regenwasser vom Dach ablaufen, ohne durch horizontale Zwischenräume zwischen benachbarten Modulen hindurchzufließen. Somit kann im Idealfall das Dach allein durch Solarmodule gedeckt werden.

Fig. 31b zeigt eine ähnliche Situation wie bei Fig. 31a, wobei allerdings die Aufnahmeprofile 248₁, 248₂, 248₃ mit von unten nach oben abnehmender Höhe ausgebildet sind, so dass sich die bereits mit Bezug auf Fig. 31a beschriebene Schrägstellung ergibt.

Schließlich erkennt man in Fig. 31c eine Anordnung, bei der wiederum jedem Solarmodul 12₁, 12₂ und 12₃ jeweils separat ein Aufnahmeprofil 248₁, 248₂, 248₃ zugeordnet ist. Diese sind mit Stützelementen 256 versehen, die für eine Schrägstellung der Aufnahmeprofile 248₁, 248₂, 248₃ zur Ebene des Daches 244 sorgen, so dass wiederum die schuppenartige Anordnung der einzelnen Solarmodule 12₁, 12₂ und 12₃ erreicht wird.

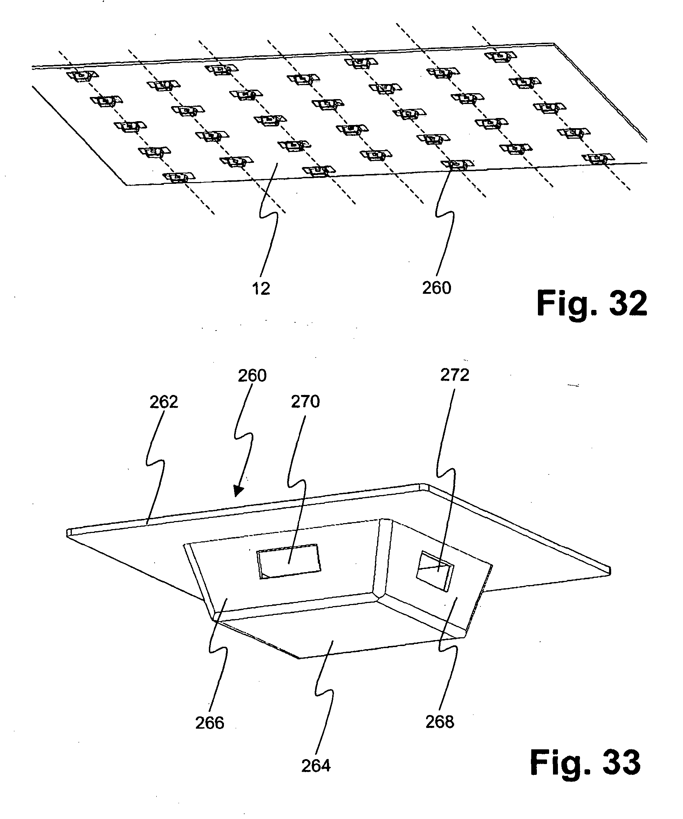

Fig. 32 zeigt ein weiteres Solarmodul 12, an dessen Rückseite einzelne Halteprofilelemente 260 angeordnet sind. Diese verlaufen entlang strichliert eingezeichneter Linien und sind zueinander entlang dieser Linien fluchtend ausgerichtet. Fig. 33 zeigt ein solches Halteprofilelement 260 in Detailansicht. Es weist eine Befestigungsplatte 262 auf, die an der Rückseite des Solarmoduls 12 durch Klebebefestigung anbringbar ist. In seinem zentralen Bereich weist das Halteprofilelement 260 einen kastenartigen hohlen Vorsprung 264 auf, dessen Seitenwände 266, 268 schräg angestellt sind. In den Seitenwänden sind jeweils Ausnehmungen 270, 272 vorgesehen. Die schräge Anstellung und die Ausnehmungen treffen auch für die in Fig. 33 nicht gezeigten verdeckten Seitenwände zu. Derartige Halteprofilelemente 260 werden in ähnlicher Weise, wie vorangehend hinsichtlich der länglichen Halteprofile ausgeführt, in entsprechenden Aufnahmeprofilen aufgenommen und über die Ausnehmungen 270, 272 in der vorstehend beschriebenen Weise fixiert.

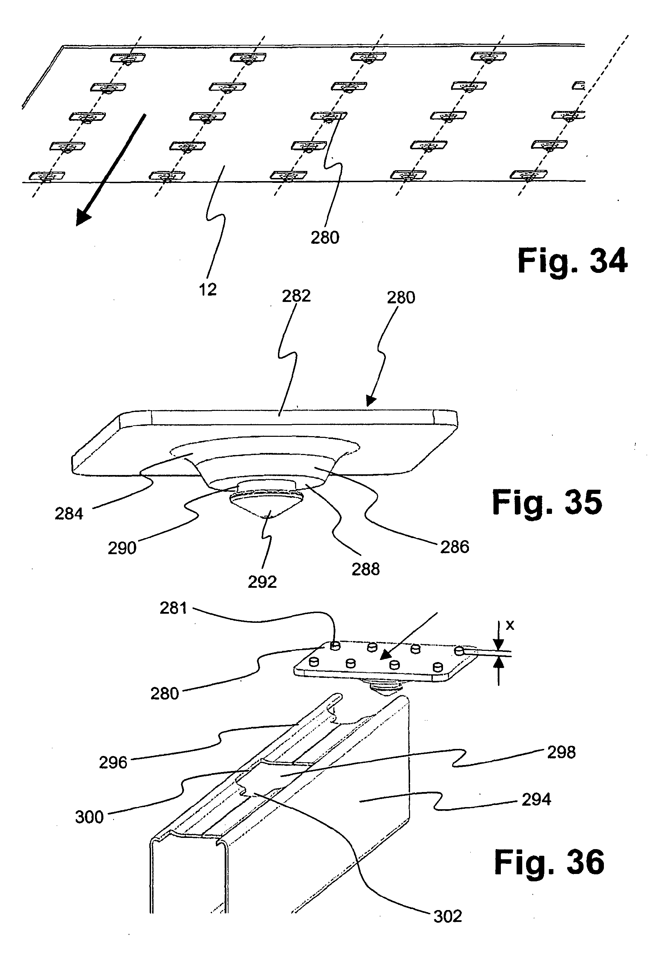

Eine ähnliche Anordnung ist auch in Fig. 34 gezeigt. Dort ist das Solarmodul 12 mit Halteprofilelementen 280 in gleicher Weise versehen, wie mit Bezug auf Fig. 32 beschrieben. Fig. 35 zeigt eine vergrößerte Ansicht eines solchen Halteprofilelements. Dieses weist wiederum eine Befestigungsplatte 282 auf, mit der es an der Unterseite des Solarmoduls 12 durch Kleben befestigbar ist. Im zentralen Bereich dieser Platte 282 erstreckt sich ein Vorsprung nach unten, der sich zunächst in einem gerundeten Abschnitt 284 von der Platte 282 aus erstreckt und dann stetig in einen kegelstumpfförmigen Abschnitt 286 übergeht. Dieser endet in einem Plateau 288. Von dem Plateau 288 aus erstreckt sich ein zylindrischer Abschnitt 290, an dem ein kegelförmiger Kopf 292 anschließt, dessen Basisdurchmesser erheblich größer als der Durchmesser des zylindrischen Abschnitts 290 ist, so dass sich an der Rückseite des Kopfes 292 eine Hinterschneidung ergibt.

Ein solches Halteprofilelement 280 lässt sich, wie in Fig. 36 gezeigt, in ein Aufnahmeprofil 294 einfügen, welches an seiner Oberseite 296 Ausnehmungen 298 aufweist. Diese Ausnehmungen 298 weisen einen breiten Abschnitt 300 auf, der harmonisch über Einführschrägen in einen schmäleren Abschnitt 302 läuft. Der breite Abschnitt 300 der Öffnung 298 ist derart dimensioniert, dass sich der Kopf 292 des Halteprofilelements 280 mit Spiel einfügen lässt. Sodann wird das Halteprofilelement 280 entsprechend dem Pfeil gemäß Fig. 36 entlang dem Aufnahmeprofil 294 verschoben, so dass der zylindrische Abschnitt in den schmäleren Teil 302 der Öffnung 298 eingreift, wobei der Kopf 292 die Öffnung mit seiner Hinterschneidung hintergreift, so dass das Haltprofilelement 280 fest im Sinne eines Schlüssel-Schloss-Prinzips an dem Aufnahmeprofil 294 verankert ist. Dabei können die Öffnungen 298 relativ zur Längsachse des Aufnahmeprofils 294 schräg angeordnet sein, so dass beim Einsetzen des Kopfes 292 in die Öffnung 298 entsprechend dem Pfeil gemäß Figur 36 ein Anzugeffekt erzielt wird, bei dem mit zunehmendem Einschieben des Kopfes 292 in den schmäleren Teil 302 der Öffnung das Solarmodul 12 stärker an das Aufnahmeprofil 294 herangezogen wird. Bei der Ausführungsform gemäß Fig. 34 bis 36 kann das Halteelementprofil 280 aus Kunststoff, aus Metall, aus Gummi oder anderen Materialien ausgebildet sein. Es kann elastische Eigenschaften aufweisen, um so einen Toleranzausgleich zu erzielen.

In Figur 36 erkennt man ferner, dass auf der Seite des Halteprofilelements 280, die am Solarmodul 12 angebracht wird, eine Reihe von lokalen Vorsprüngen 281 mit vorbestimmter Höhe x vorgesehen ist. Diese Vorsprünge 281 dienen dazu, einen vorbestimmten Abstand x relativ zum Solarmodul 12 zu erhalten, wenn die Halteprofilelemente 280 auf diesem aufgeklebt werden. Mit anderen Worten definiert die Höhe x der Vorsprünge 281 die Dicke der Klebstoffschicht zwischen Solarmodul 12 und Halteprofilelement 280.

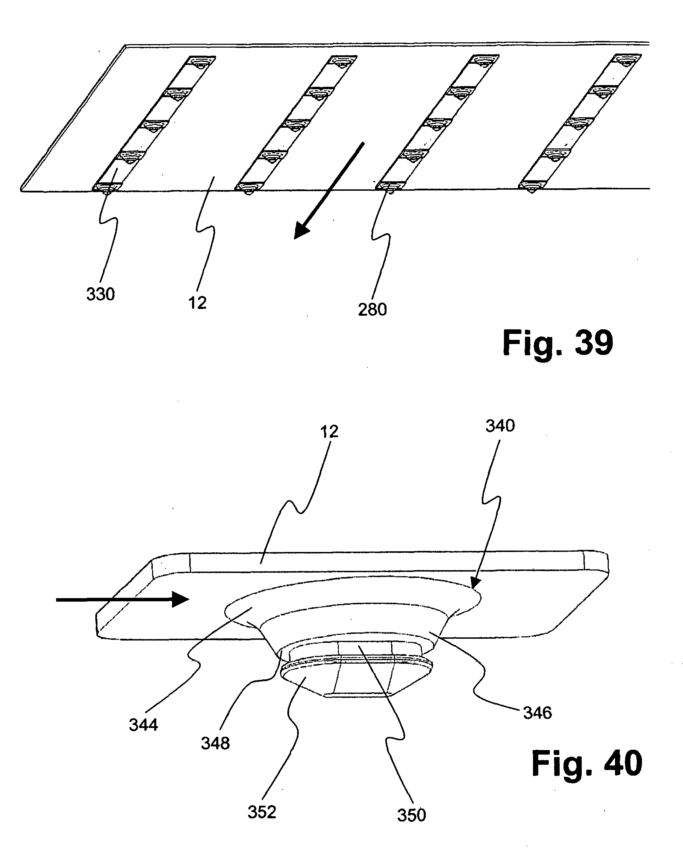

Es sei darauf hingewiesen, dass mehrere Halteprofilelemente 280 auch jeweils an einer Leiste oder Schiene 330 angebracht sein können, die dann als Ganzes an der Rückseite des Solarmoduls 12 angebracht wird. Man erkennt dieses Prinzip in Figur 39. Mit dem in Figur 39 gezeigten Pfeil ist die bevorzugte Montagerichtung gezeigt, entsprechend Figur 34 beziehungsweise Figur 36.

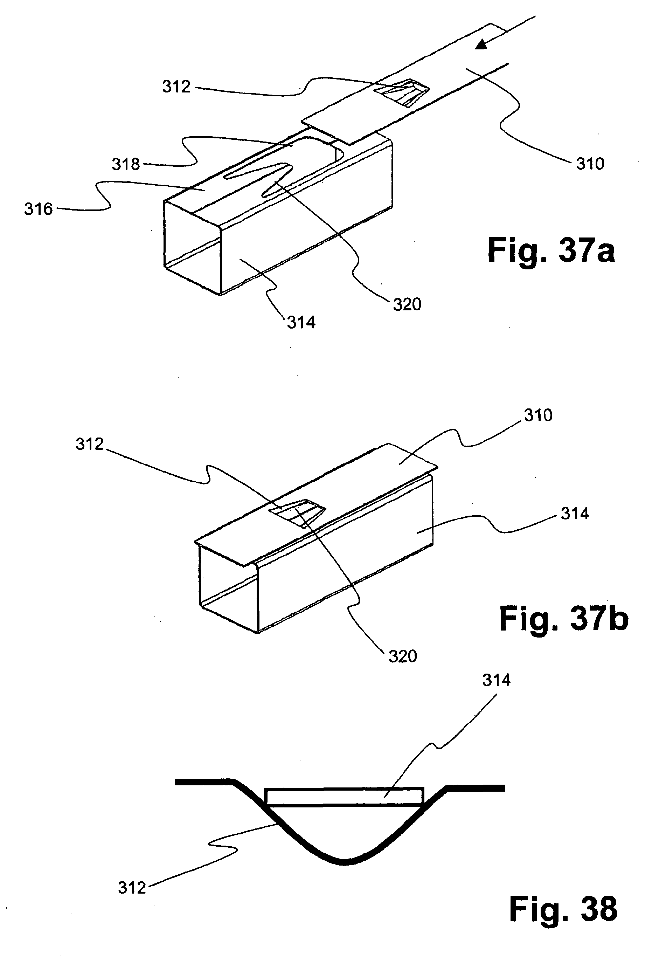

In Fig. 37a, b erkennt man eine weitere Ausführungsform der Erfindung, bei der ein im Wesentlichen flaches Halteprofil 310, das an der Rückseite eines nicht gezeigten Solarmoduls durch Verkleben anbringbar ist, mit Ausklinkungen versehen ist, die eine Art Tasche 312 bilden. Das Aufnahmeprofil 314 weist an seiner Oberseite 316 Ausnehmungen 318 auf, die derart breit ausgebildet sind, dass sie die Taschen 312, die von dem Halteprofil 310 nach unten vorstehen, in ihrer Breite mit Spiel aufnehmen können. In die Öffnungen 318 ragen Zungen 320, die jedoch in der Ebene der Oberseite 316 des Aufnahmeprofils 314 laufen. Diese Zungen sind spitz zulaufend. Ähnlich sind die Taschen 312 nach oben konisch zulaufend.

In Fig. 37b erkennt man den zusammengesetzten Zustand aus Halteprofil 310 und Aufnahmeprofil 314, wobei die Zungen 320 in die Taschen 312 formschlüssig eingreifen. Fig. 38 zeigt die Situation im Schnitt, wobei die Tasche 312 die Zunge 320 hintergreift und so das Halteprofil 310 fest an dem Aufnahmeprofil 314 hält. Wiederum kann durch die konische Ausgestaltung von Zungen 320 und Taschen 314 ein Anzugeffekt erreicht werden, der durch die auf das mit dem Halteprofil 310 versehene Solarmodul wirkende Schwerkraft unterstützt wird.

Fig. 40 zeigt eine alternative Ausführungsform eines Halteprofilelements 340, das ähnlich wie das Halteprofilelement 280 gemäß Fig. 35 ausgebildet ist. Im Gegensatz zu dem Halteprofilelement 280 gemäß Figur 35 weist das Halteprofilelement 340 aber keine Befestigungsplatte 342 auf, mit der es an der Unterseite des Solarmoduls 12 durch Kleben befestigt ist. Stattdessen ist das Halteprofilelement 340 unmittelbar an dem Solarmodul 12 mit seinem oval geformten gerundeten Abschnitt 344 angeklebt. Ausgehend von diesem Abschnitt 344 erstreckt sich das Halteprofilelement 340 dann stetig in einen sich verjüngenden Abschnitt 346 mit ovaler Grundfläche. Diese endet in einem Plateau 348. Von dem Plateau 348 aus erstreckt sich ein zylindrischer Abschnitt 350 mit ovaler Grundfläche, an dem ein entsprechender Kopf 352 anschließt. Die Basisfläche des Kopfes 352 erstreckt sich über die Grundfläche des Zylinders 350 hinaus, so dass sich an der dem Plateau 348 zugewandten Rückseite des Kopfes 352 eine Hinterschneidung ergibt.
Diese Halteprofilelement 340 lässt sich in gleicher Weise an der Rückseite eines Solarmoduls 12 anbringen, wie mit Bezug auf Fig. 34 oder 39 beschrieben. Es hat jedoch den Vorteil, dass sich aufgrund der ovalen bzw. gestreckten Grundfläche des zylindrischen Abschnitts 350 eine bessere Führung des Solarmoduls während der Montage in der entsprechenden Öffnung (siehe Bezugszeichen 302 in Fig. 36) im Aufnahmeprofil 294 ergibt, wenn das Solarmodul entlang der mit dem Pfeil gekennzeichneten Bewegungsrichtung relativ zum Aufnahmeprofil derart verschoben wird, dass das Halteprofilelement 340 verankernd in das Aufnahmeprofil eingreift. Zusätzlich kann wegen des größeren mechanisch wirksamen Bereichs eine größere Kraft an dem Halteprofilelement 340 angreifen.

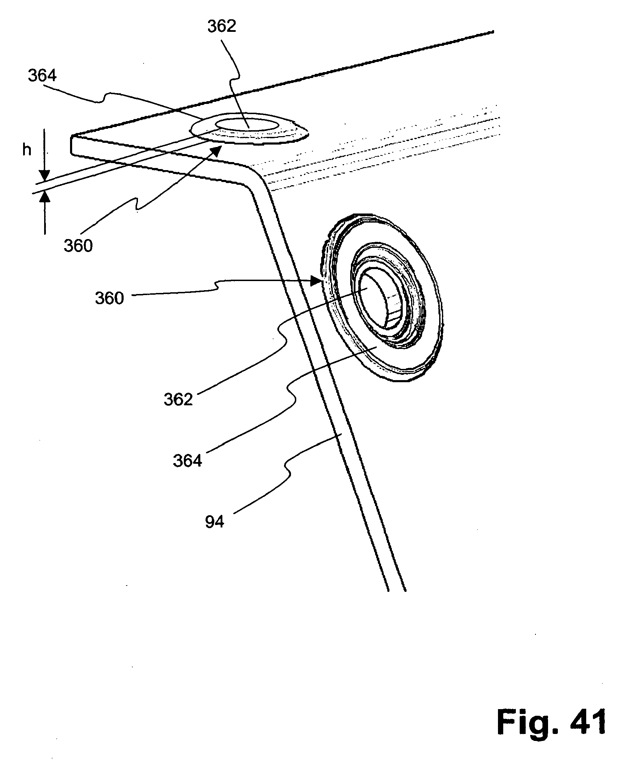

Fig. 41 zeigt einen Eckbereich eines Aufnahmeprofils, das insgesamt in seiner Form beispielsweise so ausgestaltet sein kann, wie das Aufnahmeprofil 94 aus Fig. 13. Allerdings ist das Aufnahmeprofil an denjenigen Flächen, die mit dem am Solarmodul 12 angebrachten Halteprofilen zusammenwirken, jeweils mit lokalen Vorsprüngen 360 versehen. Diese lokalen Vorsprünge erheben sich über eine geringe Höhe h von der sie umgebenden Fläche und können geschlossen plateauförmig ausgebildet sein oder - wie dargestellt - eine Öffnung 362 besitzen, die im gezeigten Ausführungsbeispiel zentral angeordnet ist, aber auch außermittig positioniert sein kann. Sie können kreisförmig ausgebildet sein, wobei die zentrale Öffnung 362 von einem ringförmigen, im Wesentlichen ebenen Plateau 364 umgeben ist. Der Übergang aus der die Vorsprünge 360 umgebenden Fläche hin zum Plateau 364 und jeweils vom Plateau 364 zur zentralen Öffnung 362 hin ist jeweils stetig und harmonisch ausgebildet, so dass sich keine scharfen Kanten ergeben.

Die lokalen Vorsprünge 360 können durch Umformen des Profilmaterials erhalten werden. Ebenfalls ist es aber auch möglich, diese Vorsprünge durch nachträgliches Anbringen von entsprechenden scheibenförmigen Körpern etwa durch Anschweißen oder Festkleben zu erhalten. Die lokalen Vorsprünge können zusätzlich oder alternativ auch am jeweils anderen Profil, in diesem Fall am Halteprofil, angebracht sein. Sie können in regelmäßigen Abständen in Längsrichtung des jeweiligen Profils in größerer Anzahl vorgesehen sein.

Die lokalen Vorsprünge 360 haben den Vorteil, dass sie Aufnahmeprofil und Halteprofil in geringem Abstand zueinander halten. Dadurch kann Feuchtigkeit, die aufgrund von Niederschlägen oder aufgrund von thermodynamischen Vorgängen, wie etwa Kondenswasser oder dergleichen, durch einen kleinen Spalt zwischen Halteprofil und Aufnahmeprofil abfließen. Darüber hinaus kann Luft zwischen diesen Profilen zirkulieren, so dass sich ein dauerhaftes Sammeln von Feuchtigkeit zwischen Aufnahmeprofil und Halteprofil vermeiden lässt und dadurch Korrosionseffekte langfristig unterbunden werden können. Darüber hinaus sorgt die zentrale Öffnung 362 für ein gezieltes Abfließen von Wasser sowie für eine Erhöhung der Luftzirkulation. Die das Spaltmaß bestimmende Höhe h wird derart klein gewählt (im Bereich von 1 mm), dass die Anlage von Aufnahmeprofil und Halteprofil und die Halteeigenschaften nicht beeinträchtigt werden, dass aber eine korrosionsvermeidende Luftzirkulation und ein Abfließen von Wasser hinreichend gewährleistet ist.

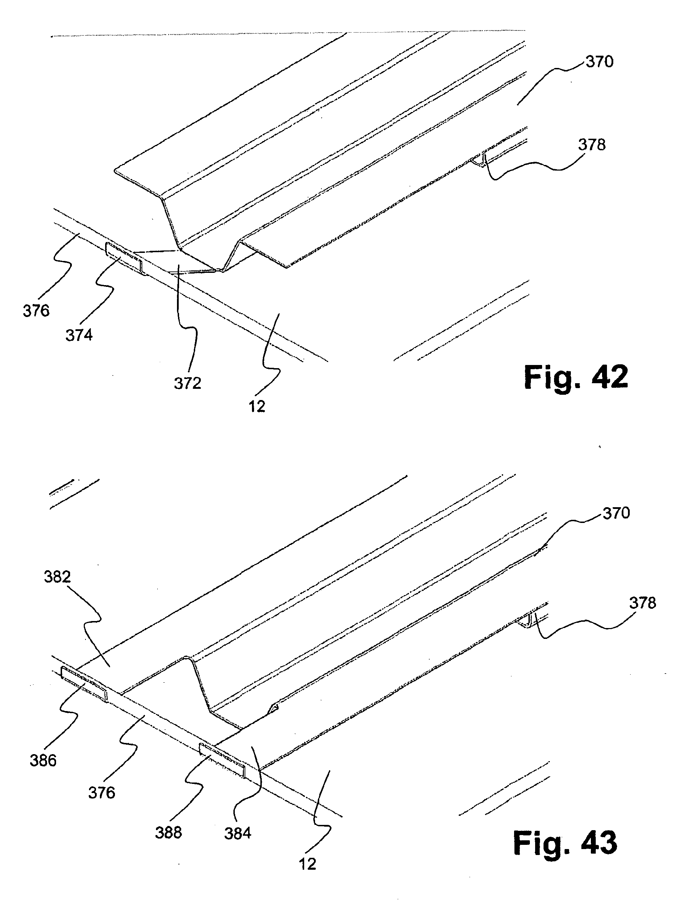

Fig. 42 bis 44 zeigen Weiterbildungen des erfindungsgemäßen Aufnahmeprofils, das an dem transparent gezeigten Solarmodul 12 angebracht ist. Man erkennt, dass sich vom Aufnahmeprofil 370 gemäß Fig. 42 von dessen vom Solarmodul 12 entfernten Abschnitt jeweils eine Greiferlasche 372 schräg in Richtung zum Solarmodul 12 hin erstreckt und mit einem abgewinkelten Abschnitt 374 an der Stirnseite 376 des Solarmoduls angreift. Dadurch kann erreicht werden, dass das Halteprofil 370 in vorbestimmter Relativlage zum Solarmodul 12 gehalten wird. Dies ist insbesondere dann gewährleistet, wenn am nicht gezeigten entgegengesetzten Ende des Halteprofils 370 eine entsprechende Haltelasche 362 mit abgewinkeltem Abschnitt 374 angeordnet ist, die die entgegengesetzte Stirnseite des Solarmoduls 12 umgreift. Dadurch lässt sich dauerhaft eine vorbestimmte Positionierung des Halteprofils 370 relativ zum Solarmodul erreichen. Ebenso ist gewährleistet, dass diese Positionierung auch über die gesamte Lebensdauer des Solarmoduls bestehen bleibt und dass eine unerwünschte Migration, beispielsweise infolge einer nicht optimalen Anbringung des Halteprofils 370 am Solarmodul 12 durch eine in ihrer Haltefunktion nachlassenden Klebstoffschicht erfolgt. Weiterhin kann dadurch auch eine Verschiebung einzelner Schichten zueinander verhindert werden, aus denen ein Solarmodul besteht und die durch Laminieren aneinander befestigt sind.

Der Vollständigkeit halber sei erwähnt, dass man in Fig. 42 noch andeutungsweise das das Halteprofil 370 aufnehmende Aufnahmeprofil 378 erkennen kann. Zur Vereinfachung der Darstellungen sind in Fig. 42 bis 44 keine Eingriffsformationen gezeigt.

Fig. 43 zeigt eine alternative Ausführungsform eines Halteprofils 380, bei dem die beiden am Solarmodul 12 angebrachten Schenkelabschnitte jeweils endseitig mit Greiferlaschen 382 und 384 versehen sind, die in Richtung zur Stirnseite des Solarmoduls 12 laufen und einen abgewinkelten Abschnitt 386, 388 aufweisen, der die Stirnseite 376 jeweils umgreift. Die Wirkung ist dieselbe, wie mit Bezug auf Fig. 42 beschrieben. Es kann eine vorbestimmte Relativlage zwischen Halteprofil 380 und Solarmodul 12 dauerhaft erreicht werden und eine unerwünschte Verlagerung von zum Solarmodul zusammenlaminierten Platten verhindert werden. Darüber hinaus dienen die abgewinkelten Abschnitte 386 und 388 auch als Kantenschutz für die Kante beziehungsweise Stirnseite 376 des Solarmoduls 12 beim Transport und bei der Montage. Das Solarmodul 12 kann beispielsweise auf den abgewinkelten Abschnitten 386, 388 abgestellt werden, ohne dass das Risiko besteht, dass seine Stirnseite 376 beschädigt wird.

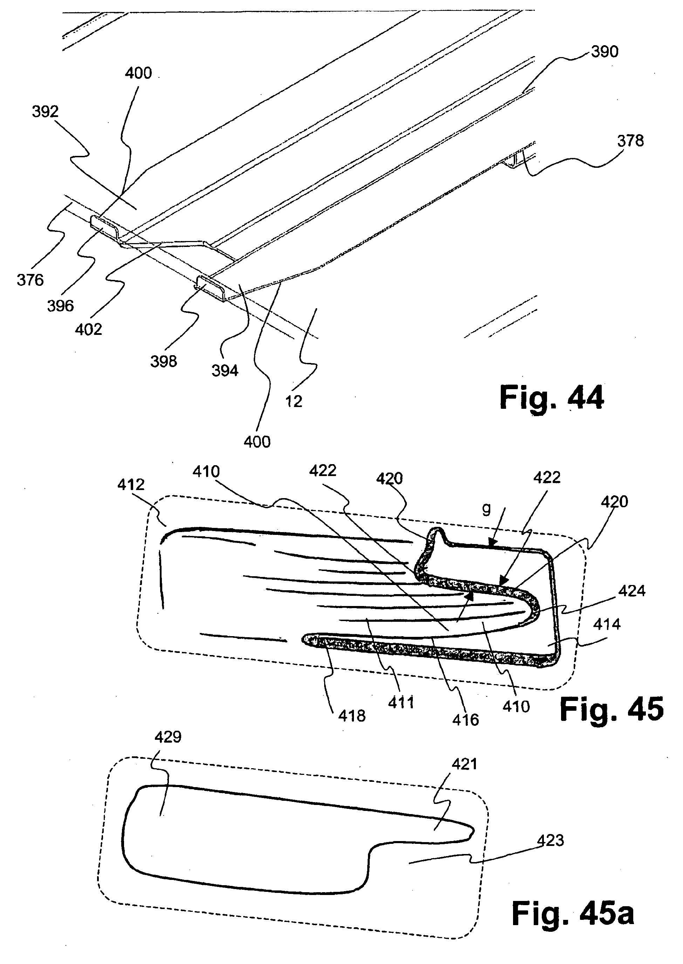

Fig. 44 zeigt eine Ausführungsform ähnlich der gemäß Fig. 43. Bei dieser ist das Halteprofil 390 wiederum mit zwei Greiferlaschen 392, 394 versehen, die mit abgewinkelten Abschnitten 396 und 398 die Stirnseite 376 des Solarmoduls 12 umgreifen. Der Unterschied zwischen der Ausführungsform gemäß Fig. 43 und der gemäß Fig. 44 besteht darin, dass die abgewinkelten Abschnitte 396 und 398 relativ kurz ausgebildet sind und das Halteprofil 390 zu den abgewinkelten Abschnitten 396, 398 schräg verlaufende Profilabschnitte 400 und 402 aufweist. Die Profilabschnitte 400 erstrecken sich in der Ebene der Bereiche, die zur Anbringung an dem Solarmodul 12 dienen. Die Profilabschnitte 402 erstrecken sich schräg vom schmalen Basisbereich hin zum abgewinkelten Bereich 396 bzw. 398.

Fig. 45 zeigt die Geometrie einer löffelartigen Lasche 410 an Aufnahmeprofil oder Halteprofil. Die Eingriffsformation gemäß Fig. 45 ist durch eine kombinierte Ausstanzung und eine Materialdeformation erreicht worden. Aus dem Aufnahmeprofil oder Halteprofil 412 ist ein freier Bereich 414 ausgestanzt. Dadurch ergibt sich die zungenartige Lasche 410 mit einer stetig gerundeten Kontur. Diese Lasche 410 ist durch einen Umformprozess um die Höhe g aus der Materialebene des umgebenden Materials des Halteprofils 412 herausgebogen und mit diesem umgebenden Material in einem Basisbereich 418 und über einen Verbindungssteg 420 verbunden. Der Verlauf aus der Materialebene des umgebenden Profils ist durch Profillinien 411 dargestellt. Die Lasche 410 weist eine konvexe untere Flanke 416 und eine im wesentlichen lineare obere Flanke 422 auf, die sich an einem Scheitel 424 treffen.

Das jeweils andere Profil von Aufnahmeprofil und Halteprofil weist eine Öffnung 429 auf, wie sie in Figur 45a und auch in Figur 20a gezeigt ist. Zur Montage wird die Lasche 410 des einen Profils in die Öffnung 429 des jeweils anderen Profils gebracht und durch Relativverlagerung der Profile zueinander derart verlagert, dass der Verbindungsbereich 420 in einen korrespondierenden Aufnahmeschlitz 421 eindringt. Die Lasche 410 hintergreift dabei einen an den Aufnahmeschlitz 421 anschließenden Halteabschnitt 423 des Profils und sorgt so für einen sicheren Halt von Halteprofil und Aufnahmeprofil aneinander.

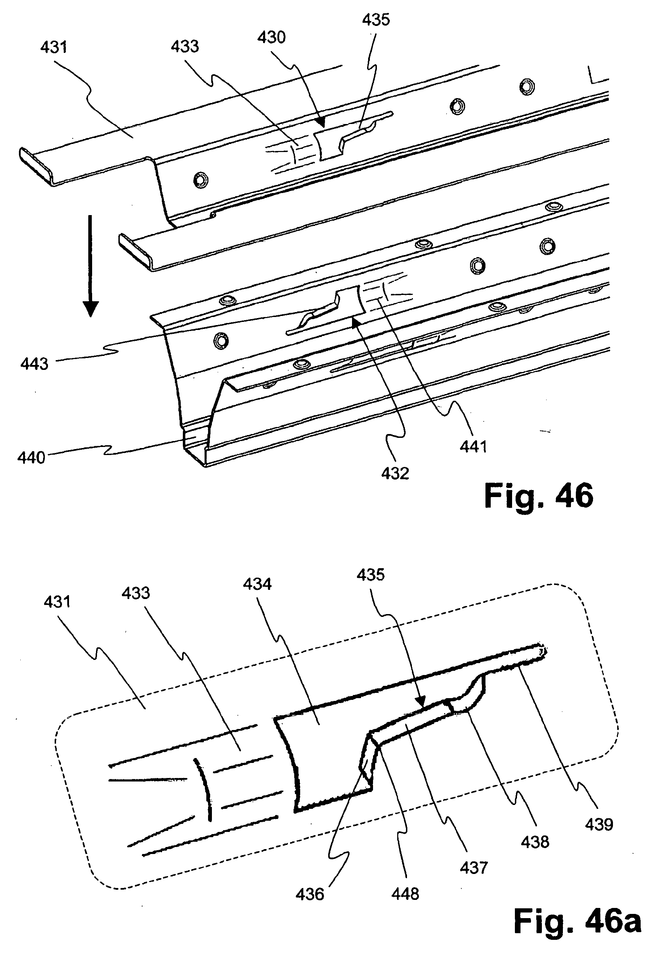

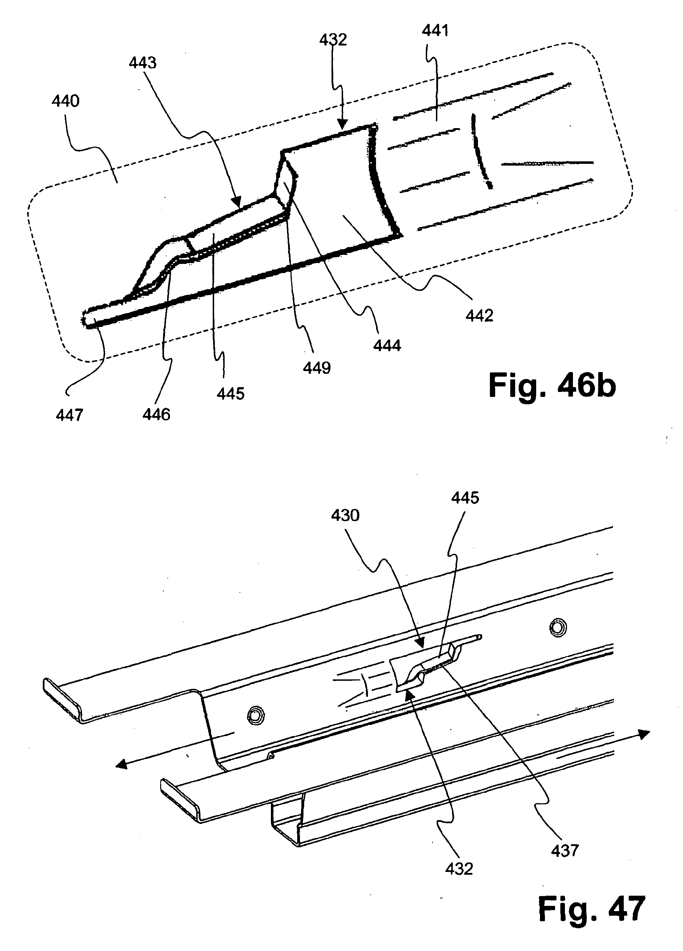

Fig. 46 zeigt eine weitere Ausführungsform der Erfindung, bei der an jedem Profil von Aufnahmeprofil 440 und Halteprofil 431 jeweils Eingriffsformationen 430 und 432 ausgebildet sind, die mit Bezug auf Figuren 46a und 46b im Detail beschrieben werden. In Figur 46 sind Aufnahmeprofil 440 und Halteprofil 431 im Vor-Montagezustand gezeigt, wohingegen in Figur 47 das Aufnahmeprofil 440 das Halteprofil 431 aufnimmt, wobei die beiden Eingriffsformationen 430 und 432 ineinander greifen.

Die in Figur 46a gezeigte Eingriffsformation 430, die als Teil des Halteprofils 431 ausgebildet ist, ist im Bereich einer lokalen, abgerundet ausgeführten Wölbung 433 angeordnet. Sie umfasst eine Ausnehmung 434, wobei die in Figur 46a untere Kontur dieser Ausnehmung 434 gestuft ausgebildet ist. Das Material des Halteprofils 431 ist in diesem Bereich geprägt, sodass sich eine gestufte Rampe 435 ergibt, die einen ersten relativ zur Profillängsachse stark geneigten Anlageabschnitt 436, einen flacher verlaufenden Anzugabschnitt 437 und einen gekrümmt verlaufenden Auslaufabschnitt 438 aufweist. Der Auslaufabschnitt 438 ist mit einer leichten Vertiefung ausgebildet und geht harmonisch in einen Schlitz 439 über.

Die Eingriffsformation 432 am Aufnahmeprofil 440 ist komplementär ausgebildet. Auch sie weist eine lokale, abgerundete Wölbung 441 auf, an die sich eine Ausnehmung 442 anschließt. Diese Ausnehmung 442 weist eine gestuft ausgebildete Rampe 443 auf, mit einem stark schräg verlaufenden Anlageabschnitt 444 und einem zur Längsachse weniger stark geneigten Anzugabschnitt 445. An diesen schließt sich wieder ein gerundet ausgeführter Auslaufabschnitt 446 an, über den das Rampenprofil harmonisch über eine kleine Vertiefung ausläuft und in einen Schlitz 447 übergeht.

Setzt man die beiden Profile 431 und 440 in einander ein, wie in Figur 46 in Vormontagezustand gezeigt (siehe Pfeil), so erkennt man, dass die beiden Wölbungen 433 und 441 zu einander konkav ausgebildet sind. Dies macht es möglich, das nach außen vorstehende Rampenprofil 435 in dem Bereich der hierzu konkaven Wölbung 441 und das nach innen vorstehende Rampenprofil 443 in den Bereich der hierzu konkaven Wölbung 433 einzuschieben, ohne dass es zu einer hinderlichen Berührung von Aufnahmeprofil 440 und Halteprofil 431 über die Rampenprofile 435 und 443 kommt.

In der Folge lassen sich dann die beiden Eingriffsformationen 430 und 432 derart aufeinander zu bewegen, dass sich schließlich die weniger stark geneigten Rampenabschnitte 437 und 445 in Kontakt gelangen. Die entsprechende Relativbewegung zwischen Aufnahmeprofil und Halteprofil ist durch die Pfeile in Figur 47 gezeigt. Dabei hintergreifen sich die beiden Rampenprofile 435 und 443, bis schließlich die beiden Auslaufabschnitte 438 und 446 mit den diesen zugewandeten stärker geneigten Rampenabschnitten 436 bzw. 444 des jeweils anderen Profils in Anlage gelangen. Dadurch kommen Aufnahmeprofil 440 und Halteprofil 431 in eine vordefinierte Endlage, wobei die beiden Rampenprofile 435 und 443 für eine definierte Anlage sorgen.

Bei einer Weiterbildung der Erfindung ist es möglich, die Übergangskante 448 bzw. 449 zwischen dem stark geneigten Rampenabschnitt 436 bzw. 444 und dem weniger stark geneigten Rampenabschnitt 437 bzw. 445 mit einer leichten Erhebung auszuführen (nicht gezeigt). Diese kann in die harmonisch verlaufende Vertiefung im Auslaufabschnitt 438 bzw. 446 im Stile einer Rastverbindung einrasten, und so für eine definierte Endstellung sorgen.

Die Ausführungsform gemäß den Figuren 46, 46a, 46b und 47 zeichnet sich durch besondere Montagefreundlichkeit aus. Es versteht sich, dass die Eingriffsprofile 430 und 432 auf beiden Seiten der jeweiligen Profile angeordnet und in festem axialem Abstand zueinander entlang der Länge der jeweiligen Profile in korrespondierender Anzahl mehrfach vorgesehen sind. Dadurch lässt sich über die gesamte Läge der ineinander greifenden Aufnahmeprofile und Halteprofile eine definierte und feste Kopplung erreichen. Durch die aneinander angreifenden Schrägen 445 und 437 erhält man einen mechanischen Anzugeffekt, d.h. die beiden Profile werden beim Ineinanderschieben entsprechend aneinander abgleitender Keile aufeinander zugepresst. Bei zur Horizontalen geneigter Anordnung eines auf dem Halteprofil 431 angebrachten Solarmoduls (nicht gezeigt) sorgt allein die durch die Neigung bedingte Hangabtriebskraft in Kombination mit den schräg verlaufenden Rampenabschnitten 437 und 445 für einen starken dauerhaften Anzugeffekt. Allerdings lässt sich das Halteprofil 431 vom Aufnahmeprofil 440 auch unter geringem Aufwand zerstörungsfrei lösen, beispielsweise wenn das Solarmodul repariert oder ausgetauscht werden muss.

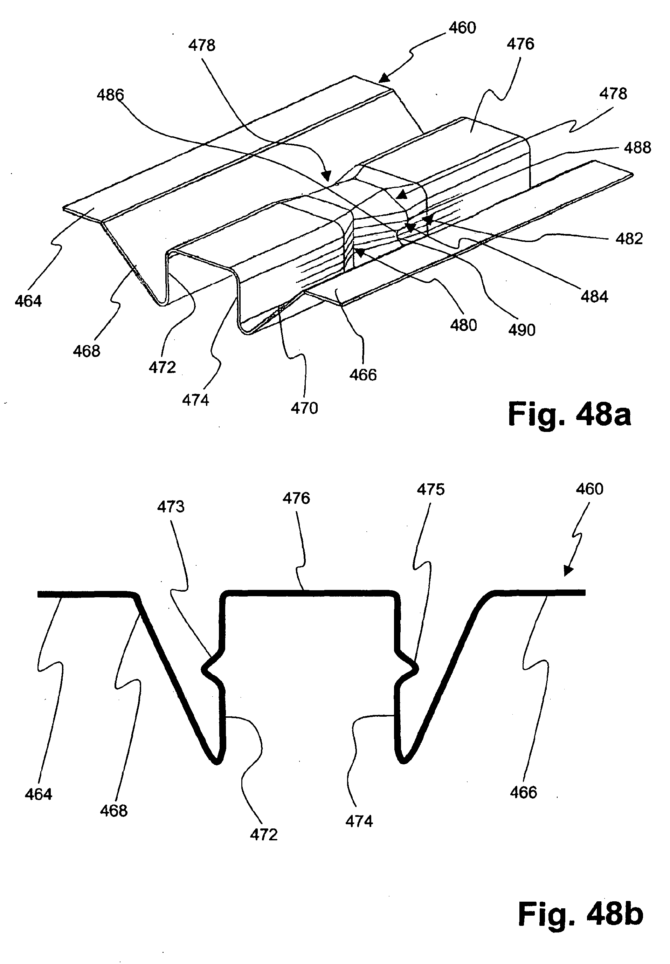

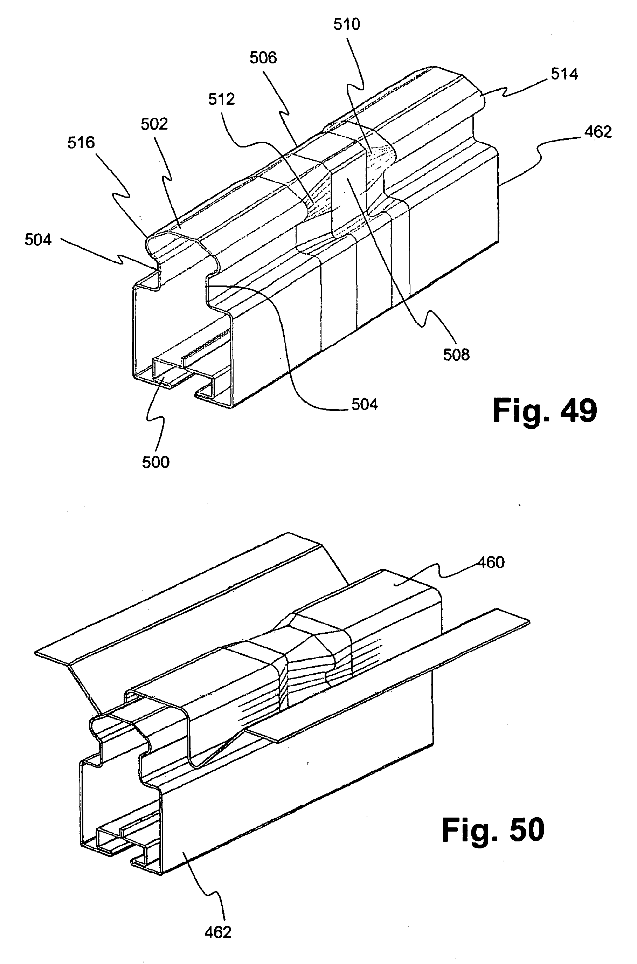

Fig. 48 bis 50 zeigen eine weitere Ausführungsform, wobei Fig. 48 das an dem Solarmodul anzubringende Aufnahmeprofil 460 zeigt und Fig. 49 das an der Unterbaukonstruktion anzubringende Halteprofil 462. Fig. 50 zeigt den montierten Zustand zwischen Halteprofil 462 und Aufnahmeprofil 460.

Im Einzelnen weist das Aufnahmeprofil 460 gemäß Fig. 48 zwei horizontal verlaufende Profilabschnitte 464 und 466 auf, die an der Rückseite eines Solarmoduls durch Ankleben anbringbar sind. Diese gehen über schräg verlaufende Profilabschnitte 468 und 470 in einen Aufnahmebereich über, der eine Art Kastenprofil aufweist, gebildet durch vertikale Schenkel 472, 474 und einen horizontalen Schenkel 476. Das Kastenprofil öffnet sich nach unten. Etwa im mittleren Bereich des Profilausschnitts gemäß Fig. 48 ist ein deformierter Abschnitt 478 gezeigt. Dieser weist einen ersten konisch verlaufenden Abschnitt 480 auf, wobei sowohl im Bereich der vertikalen Stege 472 und 474 als auch im Bereich des horizontalen Stegs 476 konisch zulaufende Flächen vorgesehen sind. Am entgegengesetzten Ende des deformierten Bereichs 478, nämlich dem Bereich 482 sind ebenfalls konische Flächen vorgesehen. Allerdings zeigt dieser Bereich an den beiden vertikalen Stegen 472 und 474 jeweils vorspringende Wangen 484. Die Wangen 484 sind derart ausgebildet, dass eine quer zur Längsrichtung verlaufende Profillinie 486 eine S-förmigen Verlauf aufweist, mit einer vorspringenden Rundung 488 und mit einer entsprechenden zurückgesetzten Rundung 490.

In Fig. 49 ist das Halteprofil gezeigt, das an der Unterbaukonstruktion gemäß Fig. 7 anbringbar ist. Dieses ist kastenförmig ausgebildet. In seinem unteren Bereich weist es eine hinterschnittene Ausnehmung 500 auf, in der Kopfschrauben oder entsprechende scheibenförmige Elemente mit Gewinde verschiebbar aufgenommen werden können, um dieses in einem Vormontagezustand verschiebbar, nach Festziehen von Befestigungsschrauben jedoch fest an der Unterbaukonstruktion anzubringen.

Am entgegengesetzten oberen Abschnitt weist das Halteprofil 462 einen Kopfbereich 502 auf, der Hinterschneidungen 504 besitzt. Der Kopfbereich 502 ist gerundet ausgebildet. Im zentralen Bereich des Profilausschnitts gemäß Fig. 49 ist der Kopfbereich ebenfalls mit einem deformierten Abschnitt 506 versehen. Dieser deformierte Abschnitt weist in seinem zentralen Bereich einen geradlinigen kastenförmigen Abschnitt 508 auf. Ausgehend von diesem kastenförmigen linearen Abschnitt erstrecken sich zu dem kopfförmigen Abschnitt 502 entsprechend schräg verlaufende Flächen. Besonderes Augenmerk gilt den mit strahlförmigen Profillinien 510 und 512 gekennzeichneten Übergangsbereichen, die ausgehend von dem Kastenabschnitt 508 in gerundete Eckbereiche 514 und 516 des Kopfbereichs 502 übergehen.

Zur Montage wird das Solarmodul mit den Aufnahmeprofilen 460 auf die Halteprofile 462 derart aufgesetzt, dass der deformierte Bereich 478 in den kastenförmigen Bereich 506 eingreift. Sodann wird das Solarmodul entlang der Längsrichtung des Halteprofils 462 verschoben. Dabei greift die Innenseite der Wangen 484 am Bereich 510 an, bis schließlich der sich an dem Bereich 510 des Halteprofils anschließende Abschnitt des runden Bereichs 514 mit dem wangenförmigen Bereich 484 in Eingriff gelangt. Dadurch ist ein formschlüssiges Zusammengreifen zwischen Aufnahmeprofil und Halteprofil gewährleistet, das ein Abheben des Solarmoduls verhindert und für einen sicheren Eingriff sorgt.

An jedem Profil können entlang seiner Längsrichtung jeweils zwei oder mehr derartiger deformierter Bereiche vorgesehen sein, wobei sich die Abstände dieser Bereiche an Halteprofil und Aufnahmeprofil entsprechen. Dadurch ergeben sich bei der Montage entlang der Längsrichtung der einzelnen Profile mehrere Eingriffsstellen, die für einen sicheren Halt der Profile aneinander und damit des Solarmoduls an der Unterbaukonstruktion sorgen.

In Fig. 48b erkennt man eine Stirnansicht eines Grundkörpers eines Aufnahmeprofils 460, das sich von dem Aufnahmeprofil gemäß Fig. 48a nur dadurch unterscheidet, dass im Bereich der vertikalen Schenkel 472 und 474 in Längsrichtung verlaufende Falzungen 473 und 475 vorgesehen sind. Diese dienen dazu, die umformtechnische Ausbildung der deformierten Abschnitte 478 zu erleichtern. Mit anderen Worten sind die Falzungen 473, 475 sozusagen als "Materialreservoir" anzusehen, um die starken Deformationen im Bereich des deformierten Abschnitts 478 fertigungstechnisch leichter zu ermöglichen, ohne dass die Wandstärke des Aufnahmeprofils 460 zu stark reduziert oder dieses gar lokal zerstört wird.

Wie bereits vorstehend angedeutet, können die einzelnen Ausführungsformen auch miteinander kombiniert werden. Insbesondere ist eine Kombination der Merkmale zum Verhindern eines Aufspreizens des jeweiligen Aufnahmeprofils mit Merkmalen möglich, die den vorstehend mehrfach beschriebenen Anzugeffekt bewirken.

Grundsätzlich ist es auch möglich, mehrere Profile des Unterbaus zu einem einzigen Profil zusammenzufassen. Man betrachte beispielsweise die Ausführungsformen gemäß Figuren 34 bis 36. So ist es möglich, zwei Aufnahmeprofile 294 gemäß Figur 36 zu einem einzigen Profil zusammenzufassen, wobei zwei parallel verlaufende Materialbahnen mit parallel verlaufenden Oberseiten 296, die entsprechenden Ausnehmungen 298 aufweisen, über einen Verbindungsprofilabschnitt miteinander verbunden sind. Auch eine solche Konstruktion, bei der mehrere Aufnahmeprofile 296 vorgesehen sind, die über einen Verbindungsprofilabschnitt einfach miteinander verbunden sind, sind unter die nachfolgenden Patentansprüchen zu subsumieren.

Die Erfindung bietet eine einfache und dennoch zuverlässige Möglichkeit, großflächiges Solarmodule ohne das Risiko einer Zerstörung bei der Montage an einem Unterbau sicher anzubringen.

## Patentansprüche

1. Befestigungsstruktur für ein großflächiges Solarmodul (12) an einem Unterbau (14), mit wenigstens zwei rückseitig an einer Komponente von Solarmodul (12) und Unterbau (14) befestigbaren Halteprofilen (46), wobei die Befestigungsstruktur weiterhin wenigstens zwei Aufnahmeprofile (50) aufweist, die jeweils an der anderen Komponente von Solarmodul (12) und Unterbau (14) in einer der Relativlage der Halteprofile (46) entsprechenden Relativlage zueinander befestigbar sind, wobei das Halteprofil (46) und das Aufnahmeprofil (50) zueinander komplementäre entsprechende Profilform aufweisen, derart, dass das Halteprofil (46) im wesentlichen formschlüssig in dem Aufnahmeprofil (50) aufnehmbar ist, wobei an wenigstens einem Paar von ineinander greifenden Halteprofil (46) und Aufnahmeprofil (50) zueinander korrespondierende Eingriffsformationen (44, 54) vorgesehen sind, mit denen das Halteprofil (46) und das Aufnahmeprofil (50) verriegelnd aneinander angreifen, **dadurch gekennzeichnet, dass** die Eingriffsformationen bezüglich einer Längsachse des Aufnahmeprofils sowie des Halteprofils einen zumindest abschnittsweise schrägen Verlauf aufweisen, derart, dass bei fortschreitendem Aneinanderangreifen der Grad des gegenseitigen Eingriffs zunimmt.

2. Befestigungsstruktur nach Anspruch 1,
**dadurch gekennzeichnet, dass** das Halteprofil (46) einen sich quer zu seiner Längsrichtung verjüngenden Abschnitt aufweist, mit dem es positionierend in einen korrespondierenden sich erweiternden Abschnitt des Aufnahmeprofils (50) einsetzbar ist, wobei insbesondere das Halteprofil (46) und das Aufnahmeprofil (50) länglich ausgebildet sind und zumindest in einem Abschnitt jeweils w-förmig oder trapezförmig ausgebildet sind.

3. Befestigungsstruktur nach einem der vorangehenden Ansprüche,
**dadurch gekennzeichnet, dass** das Aufnahmeprofil (66) in einem zur Längsrichtung orthogonalen Schnitt betrachtet eine Hinterschneidung (68) aufweist und das Halteprofil (72) einen korrespondierenden Vorsprung (74) aufweist, wobei das Aufnahmeprofil (66) derart elastisch aufweitbar ist, dass das Halteprofil (72) in das Aufnahmeprofil (66) unter elastischer Verformung einsetzbar ist, woraufhin sich Vorsprung (74) und Hinterschneidung (68) hintergreifen.

4. Befestigungsstruktur nach einem der vorangehenden Ansprüche,
**dadurch gekennzeichnet, dass** das Halteprofil (72) mit wenigstens einer Sicke versehen ist und dass das Aufnahmeprofil mit wenigstens einer korrespondierend angeordneten Komplementärsicke versehen ist, die gemeinsam die Eingriffsformation bilden, wobei insbesondere eine Mehrzahl von unmittelbar benachbarten Sicken (130) und Komplementärsicken (132) die Eingriffsformation bilden, wobei die Sicken (130) und Komplementärsicken (132) für sich betrachtet jeweils einen Ausschnitt eines Kegelmantels beschreiben.

5. Befestigungsstruktur nach einem der Ansprüche 1 bis 3,
**dadurch gekennzeichnet, dass** das Halteprofil (80) mit Einschnitten und Laschen (88) versehen ist und dass das Aufnahmeprofil (82) mit korrespondierend angeordneten Komplernentäreinschnitten und -laschen (90) versehen ist, die gemeinsam die Eingriffsformation bilden,
oder dass zumindest eine Komponente von Halteprofil und Aufnahmeprofil mit Ausklinkungen (114,116) versehen ist und dass die jeweils andere Komponente von Halteprofil und Aufnahmeprofil mit korrespondierend angeordneten, insbesondere vertieften oder als Ausnehmung ausgebildeten, Aufnahmebereichen versehen ist, die gemeinsam die Eingriffsformation bilden.

6. Befestigungsstruktur nach Anspruch 5,
**dadurch gekennzeichnet, dass** die Ausklinkungen (114,116) hakenförmig, löffelförmig oder winkelförmig ausgebildet sind, wobei die Ausklinkungen in die Aufnahmebereiche eingreifen, wobei insbesondere die Aufnahmebereiche einen erweiterten Einführabschnitt (146) für die Ausklinkungen sowie einen Fixierabschnitt (148) zum Festhalten der Ausklinkungen aufweisen.

7. Befestigungsstruktur nach einem der vorhergehenden Ansprüche,
**dadurch gekennzeichnet, dass** der Verlauf der Eingriffsformation derart schräg ausgerichtet ist, dass bei einer Montage des Solarmoduls das fortschreitende Aneinanderangreifen schwerkraftbedingt unterstützt ist.

8. Befestigungsstruktur nach einem der Ansprüche 1 bis 3,
**dadurch gekennzeichnet, dass** zumindest eine Komponente von Halteprofil und Aufnahmeprofil mit Bolzen (192), insbesondere Kopfbolzen, versehen ist und dass die jeweils andere Komponente von Halteprofil und Aufnahmeprofil mit korrespondierend angeordneten Aufnahmebereichen versehen ist, die gemeinsam die Eingriffsformation bilden.

9. Befestigungsstruktur nach einem der Ansprüche 1 bis 3,
**dadurch gekennzeichnet, dass** das Halteprofil mit lokalen Deformationen versehen ist und dass das Aufnahmeprofil mit korrespondierenden lokalen Deformationen versehen ist, wobei das Halteprofil in einer Montagestellung mit einem quer zu seiner Längsrichtung vorspringenden Bereich seiner lokalen Deformationen in einen entsprechend quer zu seiner Längsrichtung aufgeweiteten Bereich des Aufnahmeprofils quer zur Längsrichtung einsetzbar ist und nach einer Relativverlagerung zwischen Halteprofil und Aufnahmeprofil entlang deren Längsrichtung der vorspringende Bereich des Halteprofils einen diesen aufnehmenden zurückgesetzten Bereich des Aufnahmeprofils formschlüssig hintergreift.

10. Befestigungsstruktur nach einem der vorangehenden Ansprüche,
**dadurch gekennzeichnet, dass** an dem Halteprofil oder/und an dem Aufnahmeprofil Rampenformationen (435, 443) und/oder Anschlagelemente (106, 112) vorgesehen sind, die eine vorbestimmte Positionierung von Aufnahmeprofil und Halteprofil relativ zueinander in Profillängsrichtung oder/und quer zur Profillängsrichtung festlegen.

11. Befestigungsstruktur nach einem der vorangehenden Ansprüche,
**dadurch gekennzeichnet, dass** die an dem Solarmodul unmittelbar anbringbare Komponente von Halteprofil und Aufnahmeprofil in Profillängsrichtung länger ausgebildet ist, als die jeweils andere Komponente, und/oder dass die an dem Solarmodul unmittelbar anbringbare Komponente von Halteprofil und Aufnahmeprofil in Richtung orthogonal zum Solarmodul betrachtet mit geringerer Tiefe ausgebildet ist, als die jeweils andere Komponente.

12. Befestigungsstruktur nach einem der vorangehenden Ansprüche,
**dadurch gekennzeichnet, dass** das Halteprofil oder Aufnahmeprofil an dem Solarmodul durch eine, vorzugsweise hitzebeständige, Klebstoffschicht (30), Klebemasse oder durch ein Klebeband anbringbar ist, wobei insbesondere die Klebstoffschicht eine Mindestdicke von 2 mm aufweist und elastisch ausgebildet ist.

13. Befestigungsstruktur nach einem der vorangehenden Ansprüche,
**dadurch gekennzeichnet, dass** an der Rückseite des Solarmoduls einzelne Halteprofilelemente (260) anordenbar sind, wobei insbesondere ein Halteprofilelement einen sich von dem Solarmodul weg erstreckenden kopfartigen Vorsprung aufweist, in der mit einer Hinterschneidung (68) in einem komplementären Aufnahmeprofil aufnehmbar ist.

14. Befestigungsstruktur nach Anspruch 13,
**dadurch gekennzeichnet, dass** mehrere Halteprofilelemente auf der Rückseite des Solarmoduls linear zueinander ausrichtbar sind oder auf einer gemeinsamen Halteprofilschiene anbringbar sind.

15. Befestigungsstruktur nach einem der vorangehenden Ansprüche,
**gekennzeichnet durch** wenigstens eine Greiferlasche zum Angreifen an einer Stirnseite eines Solarmoduls, wobei insbesondere die wenigstens eine Greiferlasche an dem Halteprofil angeordnet ist.

16. Befestigungsstruktur nach Anspruch 15,
**dadurch gekennzeichnet, dass** sich die wenigstens eine Greiferlasche von einem an der Rückseite des Solarmoduls anbringbaren Abschnitt des Halteprofils zur Stirnseite hin erstreckt und diese abschnittsweise umgreift, oder dass sich die wenigstens eine Greiferlasche von einem zu der Rückseite des Solarmoduls im Abstand anordenbaren Abschnitt des Halteprofils zur Stirnseite hin erstreckt und diese abschnittsweise umgreift.

17. Befestigungsstruktur nach einem der vorangehenden Ansprüche,
**dadurch gekennzeichnet, dass** am Halteprofil oder/und am Aufnahmeprofil lokale Vorsprünge vorgesehen sind, die einen Mindestabstand zwischen Halteprofil und Aufnahmeprofil vorsehen, wobei insbesondere die lokalen Vorsprünge in ihrem Zentrum mit einer Ausnehmung versehen sind, wobei eine Anlage zwischen dem lokalen Vorsprung und dem an diesem angreifenden Abschnitt von Halteprofil oder Aufnahmeprofil in einem die Ausnehmung umgebenden Randbereich des lokalen Vorsprungs erfolgt.

18. Befestigungsstruktur nach einem der vorangehenden Ansprüche,
**gekennzeichnet durch** einen elektrischen Verbinder am Halteprofil sowie **durch** einen elektrischen Komplementäwerbinder am Aufnahmeprofil, wobei die elektrische Verbinder und der elektrische Komplementärverbinder sich in kontaktierendem Eingriffszustand befinden, wenn das Aufnahmeprofil und das Halteprofil verriegelnd aneinander angreifen.

19. Solarmodul, insbesondere großflächiges Solarmodul, mit einer Befestigungsstruktur nach einem der Ansprüche 1 bis 18.

## Claims

1. Mounting structure for a large solar module (12) at a sub-construction (14) with at least two retaining profiles (46) which are fastenable at a backside of one component of solar module (12) and sub-construction (14), wherein the mounting structure is further provided with at least two receiving profiles (50), which are each fastenable at the other component of solar module (12) and sub-construction (14) in a relative position to each other corresponding to the relative position of the retaining profiles (46), wherein the retaining profile (46) and the receiving profile (50) are provided with profile shapes which are complementarily corresponding to each other, such that the retaining profile (46) is receivable in the receiving profile (50) in a substantially positively locking manner, wherein at at least one pair of mutually engaging retaining profile (46) and receiving profile (50) engagement formations (44, 54) are provided which correspond to each other, by means of which the retaining profile (46) and the receiving profile (40) contact each other in a locking manner, **characterized in that** the engagement formations are at least sectionally provided with a slanted course with respect to a longitudinal axis of the receiving profile as well as retaining profile, such that during an advancing contacting the degree of mutual engagement increases.

2. Mounting structure according to claim 1,
**characterized in that** the retaining profile (46) is provided with a transversely tapered section with respect to its longitudinal axis by means of which it is insertable in a positioning manner in a correspondingly widening section of the receiving profile (50), wherein in particular the retaining profile (46) and the receiving profile (50) are configured longitudinally and each are configured with a w-shape or trapezoidal shape in at least one section.

3. Mounting structure according to one of the preceding claims,
**characterized in that** the receiving profile (66), when viewed in a section orthogonal to the longitudinal direction, has an undercut (68) and the retaining profile (72) has a corresponding protrusion (74), wherein the receiving profile (66) is elastically widenable such that retaining profile (72) is insertable in the receiving profile (66) under an elastic deformation, whereby the protrusion (74) and undercut (68) engage behind each other.

4. Mounting structure according to one of the preceding claims,
**characterized in that** the retaining profile (72) is provided with at least one bead and that the receiving profile is provided with a correspondingly arranged complementary bead which together from the engagement formation, wherein in particular a plurality of directly adjacent beads (130) and complementary beads (132) form the engagement formation, wherein the beads (130) and complementary beads (132) each define a section of an envelope of cone.

5. Mounting structure according to one of claims 1 to 3,
**characterized in that** the retaining profile (80) is provided with cuts and flaps (88) and that the receiving profile (82) is provided with correspondingly arranged complementary cuts and flaps (90) which together form the engagement formation,
or that at least one component of receiving profile and retaining profile is provided with notches (114, 116) and that the respective other component of receiving profile and retaining profile is provided with correspondingly arranged receiving sections, which are in particular deepened or configured as a recess, which together form the engagement formation.

6. Mounting structure according to claim 5,
**characterized in that** the notches (114, 116) are hook-shaped, spoon-shaped or angularly configured, wherein the notches engage in the receiving sections, wherein in particular the receiving sections are provided with a widened insertion section (146) for the notches as well as a fixing section (148) for retaining the notches.

7. Mounting structure according to one of the preceding claims,
**characterized in that** the course of the engagement formation is slantingly oriented in such a way, that during an assembly of the solar module the advancing contacting is supported by gravity.

8. Mounting structure according to one of claims 1 to 3,
**characterized in that** at least one component of retaining profile and receiving profile is provided with bolts (192), in particular head bolts, and that the respective other component of receiving profile and retaining profile is configured with correspondingly arranged receiving sections, which together form the engagement formation.

9. Mounting structure according to one of claims 1 to 3,
**characterized in that** the retaining profile is provided with local deformations and that the receiving profile is provided with corresponding local deformations, wherein in a mounting position the retaining profile is, transversely to its longitudinal direction, insertable with an area of its local deformations protruding transversally to its longitudinal direction into a correspondingly transversely to its longitudinal direction widened area of the receiving profile, and, after a relative dislocation between the retaining profile and receiving profile along their longitudinal directions, the protruding area of the retaining profile engages in a positively locking manner behind a recessed area of the receiving profile receiving this section.

10. Mounting structure according to one of the proceeding claims,
**characterized in that** ramp formations (435, 443) and/or stop elements (106, 112) are provided at the retaining profile and/or at the receiving profile which define a predetermined positioning of receiving profile and retaining profile relative to each other in a longitudinal profile direction and/or transverse to the longitudinal profile direction.

11. Mounting structure according to one of the preceding claims,
**characterized in that** the component of retaining profile and receiving profile which is directly mountable to the solar module is configured longer in its longitudinal profile direction than the respective other component and/or that the component of receiving profile and retaining profile which is directly mountable to the solar module is configured with a smaller depth in a direction orthogonal to the solar module than the respective other component.

12. Mounting structure according to one of the preceding claims,
**characterized in that** the receiving profile or retaining profile are mountable to the solar module by means of a preferably heat-resistant adhesive layer (30), adhesive mass or by means of an adhesive tape, wherein in particular the adhesive layer has a minimum thickness of 2 mm and is elastically configured.

13. Mounting structure according to one of the preceding claims,
**characterized in that** single retaining profile elements (260) are arrangeable at the backside of the solar module, wherein in particular a retaining profile element is provided with a head-like protrusion extending away from the solar module which is receivable in an undercut (68) in a complementary receiving profile.

14. Mounting structure according to claim 13,
**characterized in that** several retaining profile elements are linearly arrangeable to each other at the backside of the solar module or are mountable on a common retaining profile rack.

15. Mounting structure according to one of the preceding claims,
**characterized in** at least one gripping flap for contacting a face side of the solar module, wherein in particular the at least one gripping flap is arranged at the retaining profile.

16. Mounting structure according to claim 15,
**characterized in that** the at least one gripping flap extends from a section of the retaining profile which is mountable at the backside of the solar module to the face side and sectionally extends around it, or that the at least one gripping flap extends from a section of the retaining profile which is arrangeable at a distance to the backside of the solar module to the face side and sectionally extends around it.

17. Mounting structure according to one of the preceding claims,
**characterized in that** local protrusions are provided at the retaining profile and/or the receiving profile which provide a minimum distance between the receiving profile and retaining profile, wherein in particular the local protrusions are provided with a recess in their center, wherein an abutment between the local protrusions and the section of the receiving profile or retaining profile contacting this protrusion is established in an edge area of the local protrusion surrounding the recess.

18. Mounting structure according to one of the preceding claims,
**characterized in** an electric connector at the retaining profile as well as in an electric complementary connector at the receiving profile, wherein the electric connector and the electric complementary connector are in a state of contacting engagement when the receiving profile and the retaining profile contact each other in a locking manner.

19. Solar module, in particular a large solar module, with a mounting structure according to one of claims 1 to 18.

## Revendications

1. Structure de fixation pour la fixation d'un module solaire (12) de grande surface sur un bâti (14), comprenant au moins deux profilés de support (46) pouvant être fixés par l'arrière sur un constituant du module solaire (12) et du bâti (14), ladite structure de fixation présentant également au moins deux profilés de logement (50) qui peuvent être respectivement fixés l'un par rapport à l'autre sur l'autre constituant du module solaire (12) et du bâti (14) dans une position relative correspondant à la position relative des profilés de support (46), le profilé de support (46) et le profilé de logement (50) ayant des formes complémentaires de telle sorte que le profilé de support (46) peut venir se loger sensiblement par liaison de forme dans le profilé de logement (50), des éléments de prise (44, 54) se correspondant étant prévus sur au moins une paire de profilés composée d'un profilé de support (46) et d'un profilé de logement (50) engagés l'un dans l'autre, au moyen desquels éléments le profilé de support (46) et le profilé de logement (50) sont mis en prise mutuelle de manière à être bloqués, **caractérisée en ce que** lesdits éléments de prise présentent un développement au moins par endroits oblique par rapport à un axe longitudinal du profilé de logement et du profilé de support de telle manière que le degré de prise mutuelle augmente à mesure que l'emboîtement progresse.

2. Structure de fixation selon la revendication 1,
**caractérisée en ce que** le profil de support (46) présente une partie allant en se rétrécissant transversalement à sa direction longitudinale qui permet la mise en place par positionnement dans une partie correspondante du profilé de logement qui va en s'élargissant, le profilé de support (46) et le profilé de logement étant en particulier conçus de forme allongée et présentant respectivement au moins dans une de leurs parties une forme en « w » ou une forme trapézoïdale.

3. Structure de fixation selon l'une des revendications précédentes,
**caractérisée en ce que** le profilé de logement (66), vu dans une coupe orthogonale par rapport à la direction longitudinale, présente une contre-dépouille (68), et le profilé de support (72) une saillie correspondante (74), le profilé de logement (66) pouvant s'élargir de manière élastique de telle sorte que le profilé de support (72) peut être introduit dans le profilé de logement (66) par déformation élastique, après quoi la saillie (74) et la contre-dépouille (68) viennent en prise l'une avec l'autre.

4. Structure de fixation selon l'une des revendications précédentes,
**caractérisée en ce que** le profilé de support (72) est pourvu d'au moins une moulure, et le profilé de logement d'au moins une moulure complémentaire disposée de manière correspondante, lesquelles forment ensemble l'élément de prise, plusieurs moulures directement adjacentes (130) et de moulures complémentaires (132) formant en particulier l'élément de prise, les moulures (130) et les moulures complémentaires (132) décrivant, considérées séparément, respectivement une section d'une enveloppe conique.

5. Structure de fixation selon l'une des revendications 1 à 3,
**caractérisée en ce que** le profilé de support (80) est pourvu d'entailles et de pattes (88), et le profilé de logement (82) d'entailles et de pattes (90) complémentaires disposées de manière correspondante, lesquelles forment ensemble l'élément de prise,
ou **en ce qu'**au moins un constituant du profilé de support et du profilé de logement est pourvu d'encoches (114, 116) et que l'autre constituant du profilé de support et du profilé de logement est pourvu de zones de logement disposées de manière correspondante, et plus particulièrement de zones de logement réalisées sous forme de creux ou d'évidements, lesquelles zones forment ensemble l'élément de prise.

6. Structure de fixation selon la revendication 5,
**caractérisée en ce que** les encoches (114, 116) sont réalisées en forme de crochet, de cuiller ou en forme d'angle, les encoches s'engageant dans les zones de logement, les zones de logement présentant en particulier une section d'introduction élargie (146) pour faire pénétrer les encoches, ainsi qu'un segment de fixation (148) pour retenir les encoches.

7. Structure de fixation selon l'une des revendications précédentes,
**caractérisée en ce que** le développement de l'élément de prise est conçu oblique de telle manière que, lors du montage du module solaire, l'emboîtement progressif est facilité par la force de gravité.

8. Structure de fixation selon l'une des revendications 1 à 3,
**caractérisée en ce qu'**au moins un constituant du profilé de support et du profilé de logement est pourvu de boulons (192), en particulier de boulons à tête, et l'autre constituant du profilé de support et du profilé de logement de zones de logement disposées de manière correspondante, lesquels forment ensemble l'élément de prise.

9. Structure de fixation selon l'une des revendications 1 à 3,
**caractérisée en ce que** le profilé de support est pourvu de déformations locales, et le profilé de logement de déformations locales correspondantes, le profilé de support pouvant, dans une position de montage, être introduit transversalement à la direction longitudinale avec une zone de ses déformations locales faisant saillie transversalement à sa direction longitudinale dans une zone du profilé de logement élargie en conséquence transversalement à sa direction longitudinale, et, après un déplacement relatif entre le profilé de support et le profilé de logement le long de leur direction longitudinale, la zone en saillie du profilé de support vient s'emboîter par complémentarité de forme dans une zone en retrait du profilé de logement.

10. Structure de fixation selon l'une des revendications précédentes,
**caractérisée en ce que** des éléments formant une rampe (435, 443) et/ou des éléments de butée (106, 112) sont prévus sur le profilé de support ou/et sur le profilé de logement, lesquels éléments déterminent un positionnement prédéfini du profilé de logement et du profilé de support l'un par rapport à l'autre dans la direction longitudinale du profilé et/ou transversalement à la direction longitudinale de celui-ci.

11. Structure de fixation selon l'une des revendications précédentes,
**caractérisée en ce que** le constituant du profilé de support et du profilé de logement pouvant être directement monté sur le module solaire est réalisé plus long dans la direction longitudinale du profilé que l'autre constituant, et/ou que le constituant du profilé de support et du profilé de logement pouvant être directement monté sur le module solaire est, considéré dans la direction orthogonale au module solaire, réalisé avec une plus faible profondeur que l'autre constituant.

12. Structure de fixation selon l'une des revendications précédentes,
**caractérisée en ce que** le profilé de support ou le profilé de logement peut être fixé sur le module solaire à l'aide d'une couche de colle (30), de préférence résistante à la chaleur, d'une masse adhésive ou d'un ruban adhésif, la couche de colle présentant en particulier une épaisseur minimum de 2 mm et étant réalisée de manière élastique.

13. Structure de fixation selon l'une des revendications précédentes,
**caractérisée en ce que** des éléments de profil de support individuels (260) peuvent être disposés au dos du module solaire, un élément de profilé de support présentant en particulier une saillie en forme de tête partant du module solaire, laquelle peut être introduite avec une contre-dépouille (68) dans un profilé de logement complémentaire.

14. Structure de fixation selon la revendication 13,
**caractérisée en ce que** plusieurs éléments de profilé de support sont orientables linéairement les uns par rapport aux autres au dos du module solaire ou peuvent être montés sur une glissière de profilé de support commune.

15. Structure de fixation selon l'une des revendications précédentes,
**caractérisée par** au moins une languette de prise conçue pour venir en prise sur une face frontale du module solaire, ladite languette de prise étant en particulier disposée sur le profilé de support.

16. Structure de fixation selon la revendication 15,
**caractérisée en ce que** ladite languette de prise s'étend depuis un tronçon du profilé de support pouvant être disposé au dos du module solaire vers la face frontale et entoure celle-ci par endroits, ou que ladite languette de prise s'étend depuis un tronçon du profilé de support pouvant être disposé à distance du dos du module solaire vers la face frontale et entoure celle-ci par endroits.

17. Structure de fixation selon l'une des revendications précédentes,
**caractérisée en ce que** des saillies locales sont prévues sur le profilé de support ou/et sur le profilé de logement, lesquelles prévoient une distance minimale entre le profilé de support et le profilé de logement, les saillies locales étant en particulier pourvues en leur centre d'un évidement, un contact s'opérant entre la saillie locale et le tronçon de profilé de support ou de profilé de logement agissant sur celle-ci dans une zone périphérique de la saillie locale entourant l'évidement.

18. Structure de fixation selon l'une des revendications précédentes,
**caractérisée par** un connecteur électrique sur le profilé de support, ainsi que par un connecteur électrique complémentaire sur le profilé de logement, le connecteur électrique et le connecteur électrique complémentaire se trouvant en position de contact lorsque le profilé de logement et le profilé de support s'emboîtent l'un dans l'autre en verrouillage.

19. Module solaire, plus particulièrement un module solaire de grande surface, équipé d'une structure de fixation selon l'une des revendications 1 à 18.
